(19) Europäisches Patentamt
European Patent Office
Office européen des brevets

(11) EP 4 776 036 A1

(12) **EUROPEAN PATENT APPLICATION**
published in accordance with Art. 153(4) EPC

(43) Date of publication:
**15.07.2026 Bulletin 2026/29**

(21) Application number: **24862777.0**

(22) Date of filing: **03.09.2024**

(51) International Patent Classification (IPC):
*G02B 5/28* (2006.01)   *B32B 7/025* (2019.01)
*G02B 5/26* (2006.01)   *G02B 27/01* (2006.01)
*G02B 27/02* (2006.01)   *G09F 9/00* (2006.01)

(52) Cooperative Patent Classification (CPC):
**B32B 7/025; G02B 5/26; G02B 5/28; G02B 27/01; G02B 27/02; G09F 9/00**

(86) International application number:
**PCT/JP2024/031553**

(87) International publication number:
**WO 2025/053125 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143377**
**30.05.2024 JP 2024087593**

(71) Applicant: **Toray Industries, Inc.**
**Tokyo 103-8666 (JP)**

(72) Inventors:
• **MATSUO, Yuji**
**Otsu-shi, Shiga 520-8558 (JP)**
• **GOUDA, Wataru**
**Otsu-shi, Shiga 520-8558 (JP)**

(74) Representative: **Mewburn Ellis LLP**
**Aurora Building**
**Counterslip**
**Bristol BS1 6BX (GB)**

(54) **MULTILAYER LAMINATED FILM AND PROJECTION IMAGE DISPLAY MEMBER**

(57)    The object of the present invention is to provide a multilayer laminated film having both a near-infrared ray reflecting function and a function of reflecting visible P-wave light in an oblique direction while being transparent to transmit visible light in a front direction, and the main object thereof is to provide a multilayer laminated film including ordered arrays of three or more types of resin layers, wherein, when a dielectric constant of each of the resin layers at a loss energy of 2.5 eV measured by EELS measurement is a dielectric constant $X_i$ ($i$ = 1, 2, 3 ...), and the resin layers are defined as a layer A, a layer B, and a layer C in a descending order having the larger dielectric constant $X_i$, all of the following (1) to (3) are satisfied: (1) the multilayer laminated film has a repeating unit structure in which repeating units are laminated, the repeating units each having layers arrayed in an order of layer A/layer B/layer C/layer B; (2) units having a total layer thickness in each repeating unit of 250 to 630 nm are 80% to 100% of all the repeating units; and (3) the layer A is a crystalline thermoplastic resin layer and the layer B and the layer C are amorphous thermoplastic resin layers.

【FIG.1】

**Description**

TECHNICAL FIELD

The present invention relates to a multilayer laminated film having both a near-infrared ray reflecting function and a function of reflecting visible P-wave light in an oblique direction while being transparent to transmit visible light in a front direction. Furthermore, the present invention relates to a projected image display member using the multilayer laminated film, a projected image display device using the projected image display member, a transportation system such as an automobile using the projected image display device, and a building using the projected image display device.

BACKGROUND ART

In recent years, under the carbon dioxide emission regulations due to environmental protection, heat-ray cut glass capable of suppressing inflow of heat from outside in summer, particularly due to sunlight, has attracted attention. The heat-ray cut glass is used as window glass for vehicles such as automobiles and trains and buildings. Examples of such heat-ray cut glass include one in which a heat-ray absorber is contained in glass or an interlayer film used for laminated glass, and a heat ray (near infrared ray) is blocked by the heat-ray absorber (for example, Patent Document 1), one in which a metal film is formed on a glass surface by sputtering or the like, and the near infrared ray is reflected and blocked (for example, Patent Document 2), and one in which a polymer multilayer laminated film in which polymer layers having different refractive indices are alternately laminated is inserted between glass and the interlayer film, and the near infrared ray is reflected to block the heat ray (for example, Patent Document 3).

Among them, in the method using the heat-ray absorber, since sunlight incident from the outside is converted into thermal energy, there is a problem that generated heat is radiated into the room and the heat-ray cutting efficiency is lowered. In addition, when the heat-ray absorber absorbs near infrared rays, the glass temperature partially increases, and the glass body may be damaged due to a difference from the outside air temperature. In addition, in a method of forming a metal film on a glass surface by sputtering or the like, not only near infrared rays but also visible light is reflected, so that coloring is likely to occur, and a communication device or the like cannot be used inside in some cases because electromagnetic waves are shielded.

As compared with the method using a heat-ray absorber, a polymer multilayer laminated film that reflects near infrared rays can selectively reflect near infrared rays because the thickness of the layer can be controlled to select a wavelength to be reflected, and heat-ray cutting performance can be improved while visible light transmittance is maintained. In addition, since a material that blocks radio waves, such as metal, is not contained, excellent radio-wave transparency is maintained.

As another demand, in recent years, a large number of projected image display devices are mounted on a transportation system such as an automobile, the projected image display devices projecting a moving image on a projected image display member such as laminated glass and displaying a background visually recognized through the projected image display member and the projected image in an overlapping manner. These projected image display devices project an S-wave moving image from a light source onto the projected image display member, and in order to prevent a double image due to reflection on the front and back surfaces of the projected image display member, there is a projected image display device in which an interlayer film to be inserted into laminated glass has a wedge angle (for example, Patent Document 4). However, when the user wears polarization sunglasses, S waves in visible light from the light source are absorbed by the polarization sunglasses, so that there is a problem that the projected image cannot be visually recognized. To solve this problem, a method has been proposed in which a polarizing reflection film is disposed in the laminated glass, and a P-wave moving image is incident at a Brewster's angle of glass to solve a double image (Patent Document 5). In addition, as another method for solving the problem, a method has been proposed in which a multilayer laminated film that allows transmission in a front direction and reflects only P waves in an oblique direction is disposed in the laminated glass, and the P-wave moving image is incident at a Brewster's angle of the laminated glass to solve a double image (Patent Document 6).

PRIOR ART DOCUMENTS

PATENT DOCUMENTS

Patent Document 1: Japanese Patent Laid-open Publication No. 2010-17854
Patent Document 2: Japanese Patent Laid-open Publication No. 2001-310407
Patent Document 3: WO 2005/040868 A

Patent Document 4: WO 2018/181687 A
Patent Document 5: WO 2005/017600 A
Patent Document 6: WO 2019/198635 A

## SUMMARY OF THE INVENTION

### PROBLEMS TO BE SOLVED BY THE INVENTION

However, the reflection functions of the multilayer laminated film that reflects near infrared rays described in Patent Document 3 and the multilayer laminated film that reflects P waves in the visible light range described in Patent Document 6 are exhibited by using different multilayer laminated films. That is, since near infrared rays and visible light are in different wavelength ranges, multilayer laminated films having different optical designs are required. Therefore, in order to make laminated glass or the like have two functions of near-infrared ray reflection and P-wave reflection, it is necessary to use two different multilayer laminated films. In that case, two different multilayer laminated films are prepared, laminated, and integrated, and then applied to laminated glass, but wrinkles and distortion occur in the laminated glass due to an increase in film thickness.

In addition, heating is generally performed when the multilayer laminated film is applied to laminated glass in order to enhance the adhesion between the laminated glass and the multilayer laminated film and to cause the multilayer laminated film to follow the curved surface shape of the laminated glass. However, it is usually difficult to make the thermal shrinkage properties of two different multilayer laminated films comparable, and when these multilayer laminated films are laminated, there is a problem that the degree of wrinkles and distortions becomes stronger due to the difference in thermal shrinkage property.

That is, an object of the present invention is to provide a multilayer laminated film having both a near-infrared ray reflecting function and a function of reflecting visible P-wave light in an oblique direction while being transparent to transmit visible light in a front direction.

### SOLUTIONS TO THE PROBLEMS

The present invention is intended to solve the above problems, and a first multilayer laminated film of the present invention and a second multilayer laminated film of the present invention have the following configurations.

The first multilayer laminated film of the present invention is a multilayer laminated film including ordered arrays of three or more types of resin layers, wherein, when a dielectric constant of each of the resin layers at a loss energy of 2.5 eV measured by electron energy loss spectroscopy (EELS measurement) is a dielectric constant $X_i$ (i = 1, 2, 3 ...), and the resin layers are defined as a layer A, a layer B, and a layer C in a descending order having the larger dielectric constant $X_i$, all of the following (1) to (3) are satisfied:

(1) the multilayer laminated film has a repeating unit structure in which repeating units are laminated, the repeating units each having layers arrayed in an order of layer A/layer B/layer C/layer B;
(2) units having a total layer thickness in each repeating unit in a range of 250 nm or more and 630 nm or less are 80% or more and 100% or less of all the repeating units; and
(3) the multilayer laminated film is constituted by a combination of the layer A that is a crystalline thermoplastic resin layer and the layer B and the layer C that are amorphous thermoplastic resin layers.

The second multilayer laminated film of the present invention is a multilayer laminated film including a repeating unit structure in which three types of resin layers (layer A, layer B, layer C) having different dielectric constants $X_i$ at a loss energy of 2.5 eV measured by electron energy loss spectroscopy (EELS measurement) are arrayed in an order of layer A/layer B/layer C/layer B, wherein units having a total layer thickness in the repeating unit of 250 nm or more and 630 nm or less are 80% or more and 100% or less of all the repeating units, in the repeating units, repeating units in which each of a lamination ratio (A/B) of the layer A to a total thickness of the layer B and a lamination ratio (C/B) of the layer C to the total thickness of the layer B is in a range of 0.8 or more and 1.3 or less are 80% or more and 100% or less of all the repeating units, in the dielectric constant $X_i$, when a dielectric constant of the layer A is $X_A$, a dielectric constant of the layer B is $X_B$, and a dielectric constant of the layer C is $X_C$, $X_A > X_B > X_C$ is satisfied, and an average reflectance of visible P-wave light incident at an angle of 60° to a normal line of a film surface is 10% or more and 99% or less.

### EFFECTS OF THE INVENTION

According to the present invention, it is possible to provide a multilayer laminated film having both a near-infrared ray reflecting function and a function of reflecting visible P-wave light in an oblique direction while being transparent to transmit visible light in a front direction.

BRIEF DESCRIPTION OF THE DRAWINGS

Fig. 1 includes schematic diagrams showing transmission and reflection of a multilayer laminated film. Fig. 1(a) is a conventional near-infrared ray reflecting multilayer laminated film. Fig. 1(b) is a P-wave reflecting multilayer laminated film. Fig. 1(d) is a multilayer laminated film of the present invention.

Fig. 2 includes schematic diagrams showing application of the laminated film of the present invention to laminated glass.

Fig. 3 includes characteristic diagrams showing incident angle dependence of average reflectance when light of P waves and S waves having wavelengths of 400 nm to 700 nm is incident. Fig. 3(a) is a conventional transparent resin film, Fig. 3(b) is a conventional multilayer laminated film that reflects light, Fig. 3(c) is a conventional multilayer laminated film that transmits visible light and reflects near infrared rays, and Fig. 3(d) is the multilayer laminated film of the present invention.

Fig. 4 is a diagram showing a change in refractive index with respect to incident angles of a layer A, a layer B, and a layer C in Example 1 and Comparative Example 1.

Fig. 5 is a graph comparing an average reflectance of visible P-wave light with respect to incident angles of the multilayer laminated film of the present invention with that of a conventional technology.

Fig. 6 is an outline diagram for explaining layer thickness distributions of the layer A, the layer B, and the layer C of the multilayer laminated film of the present invention.

Fig. 7 is a schematic diagram for explaining azimuth angles of the multilayer laminated film of the present invention.

Fig. 8 includes schematic diagrams each showing an example of a cross section of a projected image display member of the present invention.

Fig. 9 includes schematic diagrams each showing another example of the cross section of the projected image display member of the present invention.

Fig. 10 is an outline diagram for explaining a projected image display device of the present invention.

Fig. 11 includes outline diagrams for explaining an effect of mounting the projected image display device of the present invention.

Fig. 12 is an outline diagram for explaining the projected image display device of the present invention.

Fig. 13 is a schematic diagram for explaining evaluation of a head-up display in Examples.

EMBODIMENTS OF THE INVENTION

Multilayer laminated films of the present invention will be described specifically below. The multilayer laminated films of the present invention include a first multilayer laminated film of the present invention and a second multilayer laminated film of the present invention, which may be collectively referred to as "multilayer laminated film of the present invention".

The first multilayer laminated film of the present invention is a multilayer laminated film including ordered arrays of three or more types of resin layers, wherein, in dielectric constants $X_i$ (i = 1, 2, 3 ...) at a loss energy of 2.5 eV measured by electron energy loss spectroscopy (EELS measurement), when the resin layers are defined as a layer A, a layer B, and a layer C in a descending order having the larger dielectric constant X, all of the following (1) to (3) are satisfied:

(1) the first multilayer laminated film has a repeating unit structure in which repeating units are laminated, the repeating units each having layers arrayed in the order of layer A/layer B/layer C/layer B;
(2) units having a total layer thickness in each repeating unit of 250 nm or more and 630 nm or less are 80% or more and 100% or less of all the repeating units; and
(3) the first multilayer laminated film is constituted by a combination of the layer A, the layer B, and the layer C that are crystalline/amorphous/amorphous thermoplastic resin layers, respectively. That is, the first multilayer laminated film is constituted by a combination of the layer A that is a crystalline thermoplastic resin layer and the layer B and the layer C that are amorphous thermoplastic resin layers.

A second multilayer laminated film of the present invention includes a repeating unit structure in which three types of resin layers (layer A, layer B, layer C) having different dielectric constants $X_i$ at a loss energy of 2.5 eV measured by electron energy loss spectroscopy (EELS measurement) are arrayed in the order of layer A/layer B/layer C/layer B, units having a total layer thickness in the repeating unit of 250 nm or more and 630 nm or less are 80% or more and 100% or less of all the repeating units, in the repeating units, repeating units in which each of a lamination ratio (A/B) of the layer A to a total thickness of the layer B and a lamination ratio (C/B) of the layer C to the total thickness of the layer B is in a range of 0.8 or more and 1.3 or less are 80% or more and 100% or less of all the repeating units, and, as for the dielectric constant $X_i$, a dielectric constant $X_A$ of the layer A is the largest, a dielectric constant $X_B$ of the layer B is the second largest, and a dielectric constant $X_C$ of the layer C is the third largest. That is, in the dielectric constant $X_i$, when the dielectric constant of the layer A is $X_A$, the dielectric constant of the layer B is $X_B$, and the dielectric constant of the layer C is $X_C$, $X_A > X_B > X_C$ is satisfied. In addition, the second multilayer laminated film of the present invention is a multilayer laminated film in which an average reflectance of visible P-wave light incident at an angle of 60° to a normal line of a film surface is 10% or more and 99% or less.

An embodiment of the present invention will be described below, but the present invention is not construed as being limited to the embodiment including the following examples. Various modifications can be of course made without departing from the gist of the invention as long as the object of the invention can be achieved.

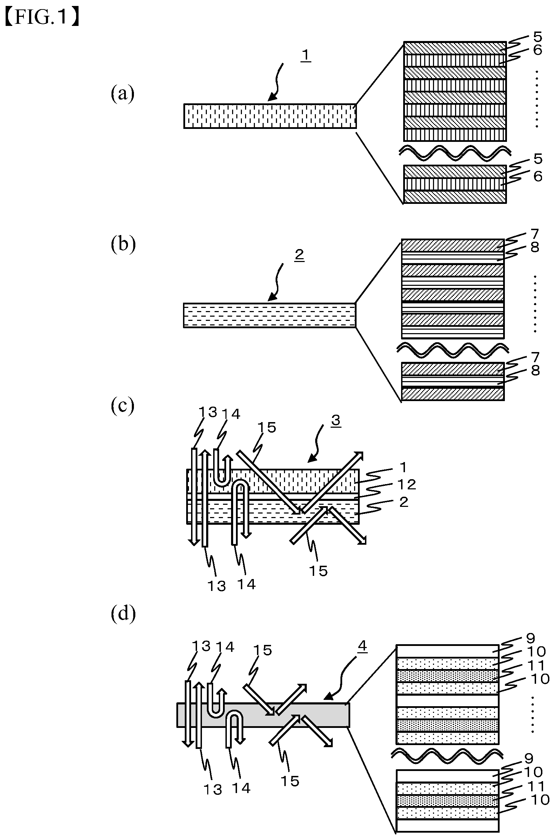

A difference between a conventional near-infrared ray reflecting multilayer laminated film and a conventional P-wave reflecting multilayer laminated film and a multilayer laminated film having both a near-infrared ray reflecting function and a function of reflecting visible P-wave light in an oblique direction while being transparent to transmit visible light in a front direction of the present invention (hereinafter, the multilayer laminated film of the present invention) will be described with reference to Fig. 1. A conventional near-infrared ray reflecting multilayer laminated film 1 shown in Fig. 1(a) and a conventional visible P-wave light reflecting multilayer laminated film 2 shown in Fig. 1(b) each have a configuration in which two different types of thermoplastic resin layers are alternately laminated. Reference numerals 5 to 8 sequentially represent one layer 5 of the two different thermoplastic resin layers of the conventional near-infrared ray reflecting multilayer laminated film, the other layer 6 of the two different thermoplastic resin layers of the conventional near-infrared ray reflecting multilayer laminated film, one layer 7 of the two different thermoplastic resin layers of the conventional P-wave reflecting multilayer laminated film, and the other layer 8 of the two different thermoplastic resin layers of the conventional P-wave reflecting multilayer laminated film.

On the other hand, a multilayer laminated film 4 of the present invention shown in Fig. 1(d) has three types of resin layers, thus, a layer A, a layer B, and a layer C, having different dielectric constants X, and has a repeating unit structure in which layers are arrayed in the order of layer A/layer B/layer C/layer B. In other words, the multilayer laminated film 4 has a repeating unit structure in which units in which layers are arrayed in the order of layer A/layer B/layer C/layer B are repeatedly laminated. In Fig. 1(d), reference numerals 9, 10, and 11 sequentially represent the layer A of the multilayer laminated film of the present invention (sometimes simply referred to as layer A) 9, the layer B of the multilayer laminated film of the present invention (sometimes simply referred to as layer B) 10, and the layer C of the multilayer laminated film of the present invention (sometimes referred to as layer C) 11. As shown in Fig. 1(d), the multilayer laminated film of the present invention preferably has a lamination configuration of (layer A/layer B/layer C/layer B)n/layer A (n is an integer) in which the layer A is disposed on both outermost surfaces. Since the same type of resin layers are disposed on both surfaces, the lamination configuration is particularly preferable from the viewpoint of facilitating film conveyance (particularly during heating) by holding a roll or a clip at the end of the film during film formation, and preventing curling of the film when the film is shrunk by applying heat to the film.

The conventional near-infrared ray reflecting multilayer laminated film 1 transmits visible light incident from the front direction, reflects near infrared rays, and transmits P waves in an oblique direction. On the other hand, the conventional P-wave reflecting multilayer laminated film 2 transmits visible light incident from the front direction, transmits near infrared rays, and reflects P waves in the oblique direction.

Therefore, in the case of preparing a film having a function of transmitting visible light incident in the front direction, reflecting near infrared rays, and reflecting P waves in the oblique direction using these multilayer laminated films, it is necessary to prepare a laminate film 3 obtained by laminating the near-infrared ray reflecting multilayer laminated film 1 and the P-wave reflecting multilayer laminated film 2 (hereinafter, sometimes simply referred to as laminate film 3) using a transparent adhesive 12 or the like as shown in Fig. 1(c). Since the laminate film 3 has characteristics of both the near-infrared ray reflecting multilayer laminated film 1 and the P-wave reflecting multilayer laminated film 2, as shown in Fig. 1(c), the laminate film 3 transmits visible light 13 incident from the front direction, reflects near infrared rays 14, and reflects P waves 15 in the oblique direction.

However, since the laminate film 3 is obtained by laminating two types of multilayer laminated films, there are problems that the film thickness increases and the thermal shrinkage properties of the two types of laminated multilayer laminated films are different. Due to the presence of the above problems, when the laminate film 3 is applied to laminated glass, wrinkles and distortions occur in the laminated glass due to the laminate film 3. Usually, in lamination processing in manufacturing laminated glass using multilayer laminated films, it is common to heat a laminate including glass and the multilayer laminated films in order to enhance adhesion between the glass and the multilayer laminated films or cause the multilayer laminated film to follow a curved surface shape of the glass. Therefore, the difference in thermal shrinkage properties between the two types of multilayer laminated films constituting the laminate film 3 further strengthens the degree of wrinkles and distortion.

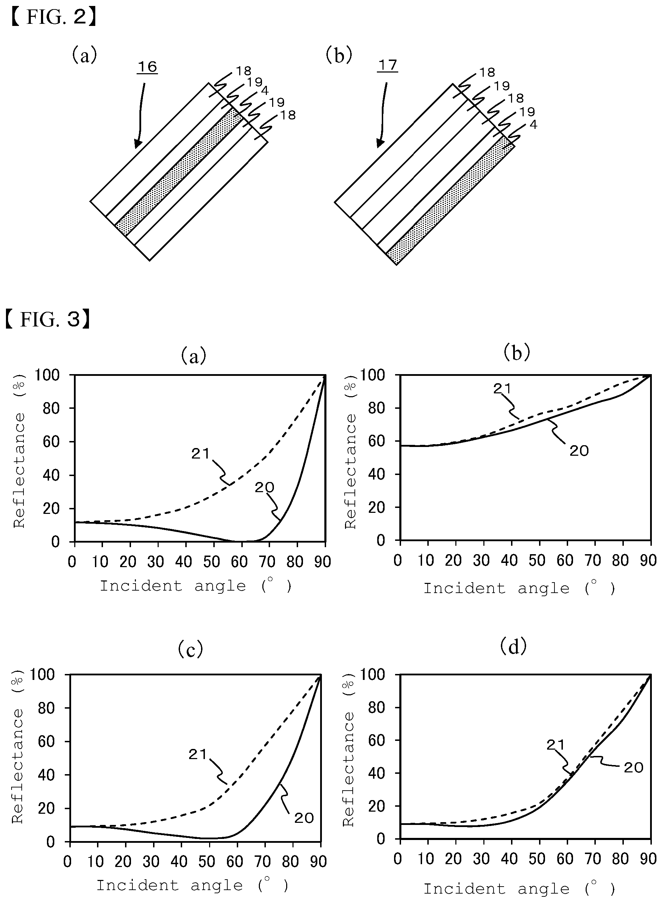

On the other hand, as shown in Fig. 1(d), the multilayer laminated film 4 of the present invention has a function of transmitting the visible light 13 incident from the front direction, reflecting the near infrared rays 14, and reflecting the P waves 15 in the oblique direction, by one multilayer laminated film. Therefore, the film thickness can be suppressed from becoming excessively thick. In addition, since there is no plurality of multilayer laminated films having different thermal shrinkage properties, when the multilayer laminated film of the present invention is applied to laminated glass, generation of wrinkles and distortion can be suppressed as compared with the case of using the laminate film 3, and laminated glass excellent in appearance can be prepared. When the laminate film 3 or the multilayer laminated film 4 of the present invention is applied to laminated glass, the laminate film 3 or the multilayer laminated film 4 of the present invention can be inserted into the laminated glass (Fig. 2(a)), or the laminate film 3 or the multilayer laminated film 4 of the present invention can be bonded to the surface of the laminated glass (Fig. 2(b)).

In Fig. 2, examples of only the multilayer laminated film 4 of the present invention are shown, and an example of an embodiment of laminated glass (configuration having a multilayer laminated film between glasses) 16 and laminated glass (configuration having a multilayer laminated film on the surface) 17 is shown. In Fig. 2, the multilayer laminated film 4 is bonded to a transparent support (glass) 18 via an adhesive layer 19.

Hereinafter, a mechanism and the like in which the multilayer laminated film of the present invention has a near-infrared ray reflecting function and a function of reflecting visible P-wave light in the oblique direction while being transparent to transmit visible light in the front direction will be described.

It is necessary that the multilayer laminated film of the present invention have a repeating unit structure in which three types of resin layers (layer A, layer B, layer C) having different dielectric constants $X_i$ (i represents a layer; for example, $X_A$ is a dielectric constant of the layer A; sometimes simply represented as dielectric constant X or dielectric constant $X_i$) at a loss energy of 2.5 eV measured by electron energy loss spectroscopy (EELS measurement) are arrayed in the order of layer A/layer B/layer C/layer B, and units having a total layer thickness in the repeating unit of 250 nm or more and 630 nm or less be 80% or more and 100% or less of all the repeating units. Here, the repeating unit structure in which three types of resin layers (layer A, layer B, layer C) are arrayed in the order of layer A/layer B/layer C/layer B means structure in which the layer A, the layer B, the layer C, and the layer B repeatedly present in the multilayer laminated film are laminated in this order as shown in Fig. 1(d). In addition, "having different dielectric constants $X_i$" means that the dielectric constants X are different by 2% or more, and "the three types of resin layers having different dielectric constants $X_i$" means the three types of resin layers having different dielectric constants X in any combination. Since the dielectric constants $X_i$ of the three types of resin layers are different, reflection occurs at the interface between the layers, and the reflection wavelength can be expressed by the following formula (A). Note that the dielectric constant X can be measured by EELS measurement, and details of the measurement method will be described later.

[Mathematical formula 1]

$$\lambda = 2(n_A d_A + n_B d_B + n_C d_C + n_B d_B) \qquad (A)$$

Here, $\lambda$ represents a reflection wavelength, $n_A$ represents an in-plane refractive index of the layer A, $d_A$ represents a thickness of the layer A, $n_B$ represents an in-plane refractive index of the layer B, $d_B$ represents a thickness of the layer B, $n_C$ represents an in-plane refractive index of the layer C, and $d_C$ represents a thickness of the layer C. The in-plane refractive index and the thickness each represent a value in the repeating unit structure in which adjacent layers are arrayed in the order of layer A/layer B/layer C/layer B. Here, the in-plane refractive index refers to an average value of the refractive index in a main orientation axis direction and the refractive index in the direction orthogonal to the main orientation axis direction in the film plane, and the definition and identification method of the main orientation axis will be described later.

In addition, examples of a method of forming a lamination configuration having a repeating unit structure in which layers are arrayed in the order of layer A/layer B/layer C/layer B and units having a total layer thickness in the repeating unit of 250 nm or more and 630 nm or less are 80% or more of all the repeating units include, for example, a method of laminating an extruded molten resin in a desired layer configuration with a feed block and adjusting a slit width of the feed block and a discharge amount of each molten resin.

From the formula (A), when the total layer thickness in the repeating unit is 250 nm or more, near-infrared rays having a wavelength of 850 nm or more can be reflected. On the other hand, if the total layer thickness in the repeating unit exceeds 630 nm, reflection occurs in the visible light range due to the influence of higher order reflection described later, so that the multilayer laminated film of the present invention causes deterioration in transparency and coloring, which is not preferable. If the total layer thickness in the repeating unit is less than 250 nm, the reflection wavelength is less than 850 nm, and if the total layer thickness is 200 nm or less, the reflection wavelength enters the visible light range, so that the multilayer laminated film of the present invention causes deterioration in transparency and coloring, which is not preferable.

Therefore, in the multilayer laminated film of the present invention, from the viewpoint of achieving both transparency and a heat shielding property, it is necessary that units having a total layer thickness in the repeating unit of 250 nm or more and 630 nm or less be 80% or more of all the repeating units. Since units having a total layer thickness in the repeating unit of 250 nm or more and 630 nm or less are 80% or more of all the repeating units, it is possible to reflect near infrared rays having wavelengths of 850 nm to 2000 nm while suppressing reflection of visible light. Therefore, when the multilayer laminated film of the present invention is used for a window member of an automobile or a building, it is possible to suppress an increase in temperature inside the vehicle or inside the room by reflecting near infrared energy of the sun entering the vehicle or the room while ensuring visibility of the outside. From the above viewpoint, the proportion of the unit having a total layer thickness in the repeating unit of 250 nm or more and 630 nm or less to all the repeating units is preferably 90% or more, and more preferably 95% or more. The upper limit of the proportion is theoretically 100%.

Examples of the method of adjusting the near-infrared reflectance of the multilayer laminated film of the present invention include a method of adjusting the in-plane refractive index difference of the layer A, the layer B, and the layer C and the number of repeating units. More specifically, as the in-plane refractive index difference (difference between the largest one and the smallest one) of the layer A, the layer B, and the layer C increases, and as the number of repeating units increases, the near-infrared reflectance increases.

Even if the same resin is used for each layer and the number of repeating units is the same, in a configuration in which the layer thickness is constant and a configuration in which the layer thickness has a distribution, the reflectance itself in a specific wavelength band is higher in the configuration in which the layer thickness is constant. On the other hand, the reflection bandwidth is wider in the configuration in which the layer thickness has a distribution. Therefore, although a specific reflectance cannot be determined only from the in-plane refractive index difference and the number of repeating units, from the viewpoint of securing a certain degree of reflectance by adjusting the thickness distribution or the like in a wide range of multilayer laminated film design, the in-plane refractive index difference between the layer A and the layer B and the in-plane refractive index difference between the layer B and the layer C are both preferably 0.03 or more, more preferably 0.07 or more, and still more preferably 0.10 or more. From the same viewpoint, the in-plane refractive index difference between the layer A and the layer C is preferably 0.06 or more, more preferably 0.14 or more, and still more preferably 0.20 or more.

In general, as the number of repeating units increases, high reflectance can be achieved for light in a wider wavelength band. Therefore, a multilayer laminated film that reflects light in a desired wavelength band can be obtained by increasing the number of repeating units. From the above viewpoint, the number of repeating units is preferably 15 or more, more preferably 45 or more, still more preferably 90 or more, and particularly preferably 140 or more. In addition, although there is no upper limit on the number of repeating units, as the number of repeating units increases, manufacturing cost increases due to an increase in size of a manufacturing apparatus, and handleability deteriorates due to an increase in thickness of the multilayer laminated film. Therefore, realistically speaking, the practical range is about 2500, preferably 500, and more preferably 200. From the viewpoint of improving the near-infrared reflectance, in the multilayer laminated film of the present invention, the number of units having a total layer thickness in the repeating unit of 250 nm or more and 630 nm or less is more preferably in the above preferable range.

The layer thickness distribution of the multilayer laminated film of the present invention is preferably a constant layer thickness distribution from the surface of the multilayer laminated film on one side toward the surface on the opposite side, a layer thickness distribution such that the layer thickness increases or decreases from the surface of the multilayer laminated film on one side toward the surface on the opposite side, a layer thickness distribution such that the layer thickness increases from the surface of the multilayer laminated film on one side toward the film center and then decreases, a layer thickness distribution such that the layer thickness decreases from the surface of the multilayer laminated film on one side toward the film center and then increases, or a combination of these distributions. Regarding the way of change in layer thickness distribution, it is preferable that the layer thickness change continuously such as linearly, geometrically, or in a difference sequence manner, or that about 12 to 52 layers have substantially the same layer thickness or repeating units in which thickness of the layers are substantially the same, the layers or repeating units having thickness that changes stepwise.

A layer having a thickness of 1% or more of the entire thickness of the multilayer laminated film can be preferably provided as a protective layer on both surface layers of the multilayer laminated film, and the thickness of each protective layer is preferably 4% or more of the entire thickness of the multilayer laminated film. The protective layer may correspond to outermost layers on both surfaces of the multilayer laminated film, and the protective layer can be provided from the viewpoint of protecting the multilayer laminated film. An increase in thickness of the protective layer leads to suppression of flow marks during film formation, improvement of the accuracy of the actual layer thickness of each layer with respect to design, suppression of deformation of thin film layers in the multilayer laminated film during and after a lamination step with another film or a molded body, pressing resistance, and the like. The upper limit of the thickness of the protective layer is 20% or less of the entire thickness of the film from the viewpoint of securing a lamination configuration unit necessary for exhibiting interference reflection while suppressing an increase in the thickness of the multilayer laminated film. The protective layer may be one layer in the repeating unit, or may not be one layer in the repeating unit. In a case where a layer is regarded as a protective layer, the layer is not included in determining the lamination ratio (A/B) of the layer A to the total thickness of the layer B in each repeating unit and the lamination ratio (C/B) of the layer C to the total thickness of the layer B. In addition, a repeating unit including a layer regarded as a protective layer is not included in counting all repeating units.

The thickness of the multilayer laminated film of the present invention is not particularly limited, but is preferably, for example, 20 $\mu$m to 300 $\mu$m. When the thickness is 20 $\mu$m or more, the stiffness of the multilayer laminated film becomes strong, and good handleability can be secured. When the thickness is 300 $\mu$m or less, the stiffness of the multilayer laminated film does not become excessively strong, and moldability is improved. That is, since the handleability and moldability are improved by setting the thickness to the above range, it is easy to cause the film to follow glass or the like having a curved surface when used for the projected image display member or the like.

A functional layer such as a primer layer, a hard coat layer, an abrasion resistant layer, a scratch preventing layer, an antireflection layer, a color correction layer, an ultraviolet absorbing layer, a light stabilizing layer, a heat ray absorbing layer, a printing layer, a gas barrier layer, or a pressure-sensitive adhesive layer may be formed on at least one surface of the multilayer laminated film. These layers may have a single layer configuration or a multilayer configuration, and one layer may have a plurality of functions. The multilayer laminated film may contain additives such as an ultraviolet absorber, a light stabilizer (HALS), a heat ray absorber, a crystal nucleating agent, and a plasticizer. These components can be used in combination as long as the effects of the present invention are not impaired.

In the second multilayer laminated film of the present invention, it is necessary that, in the repeating units, repeating units in which each of the lamination ratio (A/B) of the layer A to the total thickness of the layer B and the lamination ratio (C/B) of the layer C to the total thickness of the layer B is 0.8 or more and 1.3 or less be 80% or more and 100% or less of all the repeating units, and the dielectric constant X be larger in the order of the layer A, the layer B, and the layer C. Here, the dielectric constant X being larger in the order of the layer A, the layer B, and the layer C means that, when the dielectric constant of the layer A is $X_A$, the dielectric constant of the layer B is $X_B$, and the dielectric constant of the layer C is $X_C$, $X_A > X_B > X_C$ is satisfied. A/B and C/B can be calculated by using a transmission electron microscope (TEM) to observe a cross section parallel to the thickness direction of the multilayer laminated film and the thickness of each layer measured by a length measuring function of the microscope (details of cross-section observation with the transmission electron microscope (TEM) will be described later).

Here, "in the repeating units, the repeating units in which each of the lamination ratio (A/B) and the lamination ratio (C/B) is 0.8 or more and 1.3 or less being 80% or more and 100% or less of all the repeating units" can also be interpreted in a similar manner for a preferable range to be described later that means that the repeating units having the lamination ratio (A/B) and the lamination ratio (C/B) of both 0.8 or more and 1.3 or less are present in 80% or more and 100% or less with respect to all the repeating units. Here, "the dielectric constant $X_i$ being larger in the order of the layer A, the layer B, and the layer C" means that the dielectric constant $X_A$ of the layer A is 2% or more larger than the dielectric constant $X_B$ of the layer B, and the dielectric constant $X_B$ of the layer B is 2% or more larger than the dielectric constant $X_C$ of the layer C (the same applies to the first multilayer laminated film of the present invention).

From the same viewpoint, in the first multilayer laminated film of the present invention, it is important that layers having the larger dielectric constant X are the layer A, the layer B, and the layer C in the descending order. From the same point of view, in the first multilayer laminated film of the present invention, in the repeating unit, the repeating units in which each of the lamination ratio (A/B) of the layer A to the total thickness of the layer B and the lamination ratio (C/B) of the layer C to the total thickness of the layer B is 0.8 or more and 1.3 or less are preferably 80% or more and 100% or less of all the repeating units. The same applies to a preferable range described later.

Regarding reflection by the multilayer laminated film, in the case of the multilayer laminated film of the present invention, the reflection wavelength is determined on the basis of formula (A) described above, and in the case of a multilayer laminated film in which layers made of two different types of thermoplastic resins are alternately laminated as in Patent Document 3, the reflection wavelength is determined on the basis of formula (B). In the multilayer laminated film, not only this reflection wavelength (first-order reflection) but also reflection of 1/n wavelength occurs, such as reflection of 1/2 wavelength (second-order reflection), reflection of 1/3 wavelength (third-order reflection), reflection of 1/4 wavelength (fourth-order reflection), reflection of 1/5 wavelength (fifth-order reflection) and so forth to reflection of 1/n wavelength (nth-order reflection) (n is an integer).

[Mathematical formula 2]

$$\lambda = 2(n_A d_A + n_B d_B) \qquad (\mathrm{B})$$

Here, $\lambda$ is the reflection wavelength; $n_A$ is the in-plane refractive index of the layer A, $d_A$ is the thickness of the layer A, $n_B$ is the in-plane refractive index of the layer B, and $d_B$ is the thickness of the layer B.

In general, reflection of a 1/n wavelength occurs in the multilayer laminated film. Therefore, for example, when the multilayer laminated film is designed so as to reflect near infrared rays having a wavelength of 1000 nm, visible light having a wavelength of 500 nm, which is 1/2 of the above wavelength is also reflected, which may cause deterioration in transparency and coloring. In view of this problem, in Patent Document 3, reflection at a 1/2 wavelength is suppressed by setting the thickness ratio of the adjacent layer A/layer B to a range of 0.9 to 1.1. However, in the method shown in Patent Document 3, reflection can be suppressed only up to 1/2 wavelength, and thus when near infrared rays of 1200 nm or more are reflected, 1/3 wavelength thereof is 400 nm or more, which is visible light, so that a problem of deterioration in transparency and coloring of the multilayer laminated film occurs. Therefore, there is a limit to extending the reflection band of near infrared rays while maintaining high transmittance and transparency in the visible light range.

On the other hand, the multilayer laminated film of the present invention can suppress reflection over a wide wavelength range from 1/2 wavelength to 1/4 wavelength since the multilayer laminated film of the present invention has a repeating unit structure in which three types of resin layers (layer A, layer B, layer C) having different dielectric constants X are arrayed in the order of layer A/layer B/layer C/layer B, and in the repeating units, repeating units in which the lamination ratio (A/B) of the layer A to the total thickness of the layer B and the lamination ratio (C/B) of the layer C to the total thickness of the layer B are 0.8 or more and 1.3 or less are 80% or more and 100% or less of all the repeating units, and the dielectric constant X is larger in the order of the layer A, the layer B, and the layer C. As described above, in the multilayer laminated film of the present invention, since reflection up to 1/4 wavelength can be suppressed, near infrared rays up to a wavelength of 2000 nm (the 1/5 wavelength at which reflection occurs is 400 nm, which does not affect the transparency of visible light) can be reflected while deterioration of transparency and coloring are reduced.

When each of the lamination ratio (A/B) and the lamination ratio (C/B) is 0.8 or more and 1.3 or less, the phases of the wavelengths of 1/2 to 1/4 wavelengths reflected at the interface between the layers in the repeating unit structure become opposite phases, and a canceling effect is generated, so that higher order reflection is suppressed. Furthermore, since the dielectric constant X is larger in the order of the layer A, the layer B, and the layer C, the amplitudes of the wavelengths of 1/2 to 1/4 wavelengths reflected at the interface between the layers become the same magnitude, so that the canceling effect becomes strong.

The reflectance from the 1/2 wavelength to the 1/4 wavelength is affected not only by the lamination ratio (A/B) and the lamination ratio (C/B) but also by the refractive index difference between the layer A, the layer B, and the layer C of the multilayer laminated film, the number of repeating units, and the layer thickness distribution, and thus cannot be uniquely determined only by the lamination ratio (A/B) and the lamination ratio (C/B). However, deterioration of transparency and coloring can be reduced by bringing the phase of each wavelength from the 1/2 to 1/4 wavelengths reflected at the interface between the layers in the repeating unit structure closer to the opposite phase to enhance the canceling effect. From the above viewpoint, in the multilayer laminated film of the present invention, the lamination ratio (A/B) is more preferably 0.8 or more and 1.1 or less, and the lamination ratio (C/B) is more preferably 0.9 or more and 1.2 or less in a wide range of multilayer laminated film design. That is, the repeating units in which the lamination ratio (A/B) is 0.8 or more and 1.1 or less and the lamination ratio (C/B) is 0.9 or more and 1.2 or less are more preferably 80% or more and 100% or less of all the repeating units.

By setting the lamination ratio (A/B) and the lamination ratio (C/B) to 0.8 or more and 1.3 or less or the above preferable ranges, it is possible to suppress higher order reflection generated in a visible-light band, and thus, it is possible to obtain high transmittance of visible light and transparency. From the above viewpoint, the proportion of the repeating units in which each of the lamination ratio (A/B) and the lamination ratio (C/B) is 0.8 or more and 1.3 or less or the above preferable range is preferably 90% or more, and more preferably 95% or more of all the repeating units. The upper limit of the proportion is theoretically 100%.

In addition, the dielectric constant X being larger in the order of the layer A, the layer B, and the layer C means that the in-plane refractive index is larger in the order of the layer A, the layer B, and the layer C. Preferably, when the in-plane refractive indices of the layer A, the layer B, and the layer C are Na, Nb, and Nc, respectively, Nb satisfies $(Na \times Nc)^{1/2} \times 0.99 \le Nb \le (Na \times Nc)^{1/2} \times 1.01$, and most preferably $Nb = (Na \times Nc)^{1/2}$ is satisfied. When Nb has the above value, the canceling effect of reflection at each wavelength of 1/2 to 1/4 wavelengths can be strengthened, and the multilayer laminated film has both high near-infrared reflection and high colorless transparency when visually recognized from the front direction.

As described above, the second multilayer laminated film of the present invention can have both high transmittance of visible light and transparency while reflecting near infrared rays in a wavelength range of 850 nm to 2000 nm since the second multilayer laminated film has a repeating unit structure in which three types of resin layers (layer A, layer B, layer C) having different dielectric constants X are arrayed in the order of layer A/layer B/layer C/layer B, and has a multilayer laminated film configuration in which units having a total layer thickness in the repeating unit of 250 nm or more and 630 nm or less are 80% or more and 100% or less of all the repeating units, repeating units in which each of the lamination ratio (A/B) and the lamination ratio (C/B) in the repeating unit is 0.8 or more and 1.3 or less are 80% or more and 100% or less of all the repeating units, and the dielectric constant X is larger in the order of the layer A, the layer B, and the layer C.

In addition, in the second multilayer laminated film of the present invention, it is necessary that an average reflectance of visible P-wave light incident at an angle of 60° to a normal line of a film surface be 10% or more and 99% or less. It is preferable that the above requirement be also satisfied in the first laminated film of the present invention, and the same applies to the preferable range described later. Hereinafter, the angle formed between the normal line of the film surface and the incident light may be referred to as incident angle. The reflectance of the P wave (%) can be measured by measuring reflectance of the P wave in a wavelength range of 400 to 700 nm at each incident angle θ of 60° in increments of 1 nm using a spectrophotometer and calculating an average value thereof.

In the case of a general transparent substrate such as transparent glass or a transparent resin film, as the incident angle is gradually increased from 20° with respect to the normal line of the film surface, the reflectance of the P wave, which is one of polarized light, decreases, and the reflectance of the P wave reaches 0% at an angle called the Brewster's angle. That is, it is difficult for a general transparent substrate to transmit the P wave from the front direction and reflect the P wave from the oblique direction. On the other hand, from the viewpoint of enhancing the display property of the moving image, the average reflectance of the P wave having a wavelength of 400 nm to 700 nm incident at an incident angle of 60° is preferably large, which is preferably 20% or more, and more preferably 25% or more. Note that the upper limit of the average reflectance of the P waves having a wavelength of 400 nm to 700 nm incident at an incident angle of 60° is not particularly limited, but is 99% from the viewpoint of feasibility. Furthermore, in a case where the background is made transparent and the background and the moving image are superimposed, the average reflectance is preferably 50% or less.

The P wave and the S wave can be defined as follows. Among the electromagnetic waves (light) incident on the outer surface of an object from the oblique direction, the P wave is an electromagnetic wave in which an electric field component is parallel to the incidence plane (linearly polarized light vibrating in parallel to the incidence plane), and the S wave is an electromagnetic wave in which an electric field component is perpendicular to the incidence plane (linearly polarized light vibrating perpendicular to the incidence plane). The reflection properties of these P and S waves will be described with reference to the drawings. A graph (an example) showing the angle dependence of the average reflectance in a wavelength of 400 nm to 700 nm when P-wave and S-wave light having a wavelength of 400 nm to 700 nm are incident on a film from the air is shown in Fig. 3(a) for a conventional transparent resin film (general transparent support), in Fig. 3(b) for a conventional multilayer laminated film that reflects light, in Fig. 3(c) for a conventional multilayer laminated film that transmits visible light and reflects near infrared rays, and in Fig. 3(d) for the multilayer laminated film of the present invention. In Fig. 3, reference numerals 20 and 21 represent a reflectance of P wave 20 and a reflectance of S wave 21, respectively.

As shown in Fig. 3(a), in the general transparent support, the reflectance of the P wave decreases as the incident angle increases, and after the reflectance of the P wave becomes 0%, the reflectance of the P wave tends to increase again, according to the Fresnel's formulas. On the other hand, the reflectance of the S wave increases as the incident angle increases. As shown in Fig. 3(b), in the conventional multilayer laminated film that reflects light, both the P and S waves have a constant reflectance at an incident angle of 0° and thus the transmittance is low, and the reflectance of both the P and S waves increases as the incident angle increases. As shown in Fig. 3(c), in the conventional multilayer laminated film that transmits visible light and reflects near infrared rays, similarly to the general transparent support, the reflectance of the P wave decreases as the incident angle increases, and after the reflectance of the P wave becomes a value close to 0%, the reflectance of the P wave tends to increase again. On the other hand, the reflectance of the S wave increases as the incident angle increases. As shown in Fig. 3(d), the multilayer laminated film of the present invention has a feature that the reflectance of both the P and S waves is low (transmittance is high) at an incident angle of 0°, and the reflectance of both the P and S waves increases as the incident angle increases. By using the multilayer laminated film having such optical properties for the projected image display member, for example, it is possible to obtain good visibility of the background when the background is observed through the projected image display member from a direction perpendicular to the projected image display member surface and a good display property of the projected image when the P-wave moving image is projected on the projected image display member surface.

The principle that the multilayer laminated film of the present invention reflects P waves in the oblique direction while having high transmittance of visible light and transparency from the front direction will be described. The multilayer laminated film of the present invention suppresses reflection of 1/2 to 1/4 wavelengths of a near-infrared reflection wavelength while reflecting near-infrared rays in a wide wavelength range. Here, by making the in-plane refractive index Nb of the layer B close to $Nb = (Na \times Nc)^{1/2}$, the canceling effect of reflection from 1/2 to 1/4 wavelengths is enhanced. The multilayer laminated film of the present invention is designed such that the in-plane refractive index Nb of the layer B is made close to $Nb = (Na \times Nc)^{1/2}$ in the front direction, but the oblique direction refractive index of the layer B is made to be $Nb\theta \neq (Na\theta \times Nc\theta)^{1/2}$ in the oblique direction.

Here, $Na\theta$, $Nb\theta$, and $Nc\theta$ are refractive indices in the layer A, the layer B, and the layer C, respectively, with respect to light having a wavelength of 633 nm that has entered the multilayer laminated film at an incident angle θ (°) from the air. In the multilayer laminated film of the present invention, since the oblique direction refractive index of the layer B is $Nb\theta \neq (Na\theta \times Nc\theta)^{1/2}$ in the oblique direction, the canceling effect of reflection at 1/2 to 1/4 wavelengths is weakened in the oblique direction. Note that this canceling effect weakening of the reflection in the oblique direction acts only on the P waves and does not act on the S waves. Therefore, in the multilayer laminated film of the present invention, since the reflection of the P wave having 1/2 to 1/4 wavelengths corresponding to the visible light range occurs in the oblique direction, the average reflectance of the visible P-wave light incident at an angle of 60° to the normal line of the film surface can be set to 10% or more. Although the transparency in the oblique direction is slightly lost due to the reflection of the P wave in the oblique direction, a film having sufficiently high transparency in the front (incident angle of 0°) direction can be obtained.

As described above, the multilayer laminated film of the present invention has a unit structure in which layers are arrayed in the order of layer A/layer B/layer C/layer B, and, by controlling the layer thickness, the lamination ratio, and the refractive index in the unit structure to fall within the above-described ranges, can be provided with a near-infrared ray reflecting function and a function of reflecting visible P-wave light in the oblique direction while being transparent to transmit visible light in the front direction with one multilayer laminated film. The multilayer laminated film of the present invention exhibits a particularly remarkable effect in that a function that cannot be obtained without laminating two types of multilayer laminated films in the conventional technology can be achieved with one film. A laminate of two types of multilayer laminated films usually has a problem that wrinkles are formed in processing involving a step at a high temperature due to a difference in thermal shrinkage property of the multilayer laminated films, but the multilayer laminated film of the present invention is also advantageous in that such a problem can be solved.

From the viewpoint of setting the average reflectance of the visible P-wave light incident at an angle of 60° to the normal line of the film surface to 10% or more, it is preferable that the second multilayer laminated film of the present invention be constituted by a combination of the layer A, the layer B, and the layer C that are crystalline/amorphous/amorphous thermoplastic resin layers, respectively. For the reasons described above, it is necessary that the first multilayer laminated film of the present invention be constituted by a combination of the layer A, the layer B, and the layer C that are crystalline/amorphous/amorphous thermoplastic resin layers, respectively. Here, "being constituted by a combination of the layer A, the layer B, and the layer C that are crystalline/amorphous/amorphous thermoplastic resin layers, respectively" means that the main component of the layer A is a crystalline thermoplastic resin, and the main components of the layer B and the layer C are amorphous thermoplastic resins. The main component means a component contained in an amount of 80 mass% or more and 100 mass% or less when the total amount of components constituting the layer is 100 mass%. Here, being crystalline means that the enthalpy of fusion ($\Delta$Hm) measured in accordance with JIS-K-7122 (2012) is 5 J/g or more, and being amorphous means that the enthalpy of fusion ($\Delta$Hm) is less than 5 J/g. Since the decrease in the out-of-plane refractive index can be suppressed as the amorphous property is stronger, the enthalpy of fusion ($\Delta$Hm) is more preferably less than 3 J/g, and still more preferably less than 1 Jj/g or no fusion curve (fusion enthalpy curve) or fusing point (Tm) observed.

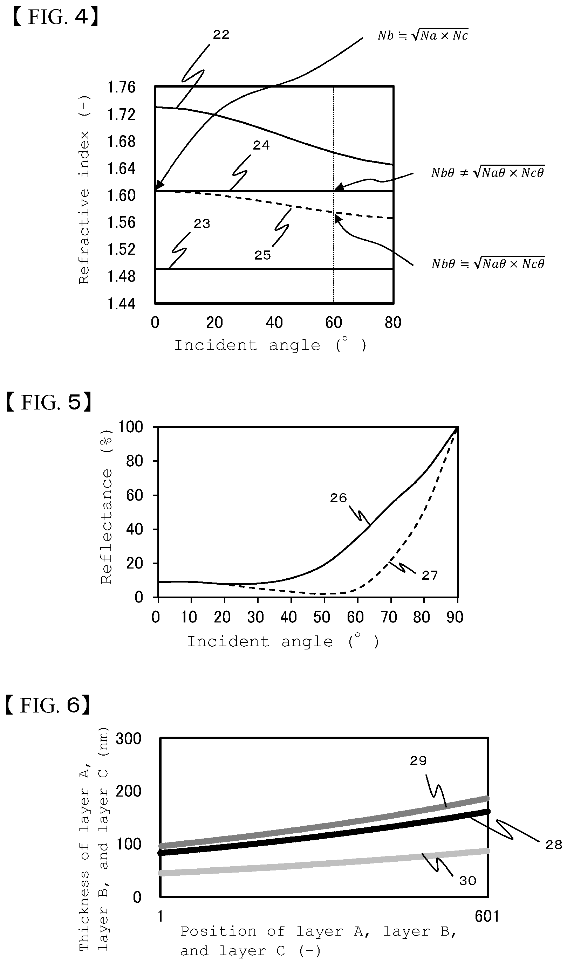

Hereinafter, the effect of forming the multilayer laminated film having such an aspect will be described with reference to Fig. 4. Fig. 4 shows the refractive indices with respect to the incident angle of P-wave light incident on the layer A, the layer B, and the layer C of the multilayer laminated films of Example 1 and Comparative Example 1 (both will be described later). Reference numerals 22 to 25 in Fig. 4 sequentially show the refractive index (Na$\theta$) at the incident angle $\theta$ of the layer A, the refractive index (Nc$\theta$) at the incident angle $\theta$ of the layer C, the refractive index (Nb$\theta$) at the incident angle $\theta$ of the layer B of the multilayer laminated film of the present invention (Example 1), and the refractive index (Nb$\theta$) at the incident angle $\theta$ of the layer B of the conventional near-infrared ray reflecting multilayer laminated film (Comparative Example 1).

The thermoplastic resin used for the layer A is crystalline and has a lower refractive index in the out-of-plane direction than in the in-plane direction. Therefore, the refractive index decreases as the incident angle increases. The thermoplastic resin used for the layer C is amorphous and has the same refractive index in the in-plane direction and the out-of-plane direction. Therefore, even when the incident angle changes, the refractive index does not change. Since the layers B used in Example 1 and Comparative Example 1 have the same value of refractive index at the front (incident angle of 0°, in-plane direction) and take a value of Nb $\approx$ (Na $\times$ Nc)$^{1/2}$, the canceling effect of reflection from 1/2 to 1/4 wavelengths is strong, and the multilayer laminated film exhibits high transmittance to visible light incident from the front direction, and thus has excellent transparency.

The thermoplastic resin of the layer B used for Comparative Example 1 is crystalline and has different refractive indices in the in-plane direction and in the out-of-plane direction. Therefore, as shown in Fig. 4, the refractive index decreases as the incident angle of light increases, and takes a value of Nb$\theta$ $\approx$ (Na$\theta$ $\times$ Nc$\theta$)$^{1/2}$ even in the oblique direction, so that reflection does not occur for visible light. On the other hand, the thermoplastic resin of the layer B used for Example 1, which is the multilayer laminated film of the present invention, is amorphous, and has substantially the same refractive index in the in-plane direction and in the out-of-plane direction. Therefore, the refractive index does not change even when the incident angle changes, and takes a value of Nb$\theta$ $\neq$ (Na$\theta$ $\times$ Nc$\theta$)$^{1/2}$ in the oblique direction as shown in Fig. 4. Therefore, reflection of P waves having 1/2 to 1/4 wavelengths occurs, so that the average reflectance of visible light incident at an angle of 60° to the normal line of the film surface can be set to 10% or more. In addition, since the average reflectance of the visible light incident at an angle of 60° to the normal line of the film surface is also affected by the number of repeating units, if the resin composition of each layer is the same, the average reflectance of the visible light can be increased as the number of repeating units is increased.

Furthermore, the difference in the average reflectance of the visible P-wave light due to the difference in the refractive index of the layer B will be described with reference to Fig. 5. In Fig. 5, reference numeral 26 represents the average reflectance of the visible P-wave light of the multilayer laminated film of the present invention (Example 1), and reference numeral 27 represents the average reflectance of the visible P-wave light of the conventional near-infrared ray reflecting multilayer laminated film (Comparative Example 1). In the conventional technology (Comparative Example 1), the average reflectance 27 of the visible P-wave light decreases from the incident angle of 0° toward 50°, and tends to increase from the incident angle of 60°. However, at the incident angle of 60°, shown is a low-level value which with a P-wave moving image cannot be sufficiently displayed. On the other hand, in the multilayer laminated film of the present invention, the average reflectance 26 of the visible P-wave light decreases extremely slightly from the incident angle of 0° toward 20°, but the average reflectance 26 of the visible P-wave light tends to increase at and after the incident angle of 20°, and shows a value with which the P-wave moving image can be sufficiently displayed at the incident angle of 60°. As described above, when multilayer laminated film is constituted by a combination of the layer A, the layer B, and the layer C that are crystalline/amorphous/amorphous thermoplastic resin layers, it becomes easy to set the average reflectance of the visible P-wave light incident at the incident angle of 60° to the normal line of the film surface to 10% or more.

Examples of another preferable aspect for setting the average reflectance of the visible P-wave light incident at an angle of 60° to the normal line of the film surface to 10% or more in the multilayer laminated film of the present invention include an aspect in which the layer A has a plane orientation coefficient of 0.06 or more, and the layer B has a dielectric constant $X_B$ in which the ratio of the dielectric constant in the in-plane direction to the dielectric constant in the out-of-plane direction is 10% or less. The ratio of the dielectric constant in the in-plane direction to the dielectric constant in the out-of-plane direction is a ratio (%) obtained by dividing the difference between the dielectric constant in the in-plane direction and the dielectric constant in the out-of-plane direction by the dielectric constant in the out-of-plane direction. Hereinafter, effects of the present aspect will be described with reference to Fig. 4. The plane orientation coefficient is defined by (in-plane refractive index) - (out-of-plane refractive index), and represents a difference in refractive index between the in-plane direction and the out-of-plane direction. When the plane orientation coefficient of the layer A is 0.06 or more, the change in refractive index between the incident angle of 0° and the oblique direction can be increased as shown by reference numeral 22 in Fig. 4. The relationship between the refractive index n and the dielectric constant X is represented by "n = $(X/X_0 \times \mu/\mu_0)^{1/2}$". Here, $X_0$ is a dielectric constant of vacuum, $\mu$ is a magnetic permeability, $\mu_0$ is a magnetic permeability of vacuum, and $\mu/\mu_0$ can be regarded as 1 for a wide range of resin in the visible light range to the near-infrared ray range. Therefore, the relationship of "n = $(X/X_0)^{1/2}$" is obtained, and it can be considered that the ratio of the dielectric constant in the in-plane direction to the dielectric constant in the out-of-plane direction of the layer B correlates with the ratio of the refractive indices.

The fact that the ratio of the dielectric constant in the in-plane direction to the dielectric constant in the out-of-plane direction is 10% or less in the dielectric constant $X_B$ of the layer B means that the difference in refractive index between the in-plane direction and the out-of-plane direction of the layer B is small, the difference between Nbθ and (Naθ × Ncθ)$^{1/2}$ is large, and reflection of P waves having 1/2 to 1/4 wavelengths occurs. From the viewpoint of increasing the average reflectance of the visible P-wave light incident at an angle of 60° to the normal line of the film surface, the plane orientation coefficient of the layer A is more preferably 0.12 or more, and even more preferably 0.18 or more, and the ratio of the dielectric constant in the in-plane direction to the dielectric constant in the out-of-plane direction is more preferably 5% or less in the dielectric constant $X_B$ of the layer B, and the ratio of the dielectric constant in the in-plane direction to the dielectric constant in the out-of-plane direction is even more preferably 3% or less in the dielectric constant X of the layer B.

The plane orientation coefficient of the layer A means a plane orientation coefficient of the layer A measured in a wavelength of 633 nm, and a method for measuring the plane orientation coefficient will be described later. The ratio of the dielectric constant in the in-plane direction to the dielectric constant in the out-of-plane direction of the layer B can be measured by electron energy loss spectroscopy (EELS measurement), and the measurement method will be described later in detail.

As a method for setting the plane orientation coefficient of the layer A of the multilayer laminated film to 0.06 or more and the ratio of the dielectric constant in the in-plane direction to the dielectric constant in the out-of-plane direction in the dielectric constant X of the layer B to 10% or less, a method in which a crystalline resin is used for the layer A and the layer A is stretched 2 times or more in at least one direction at a temperature equal to or higher than the glass transition temperature of the crystalline resin is preferable, and a method in which the layer A is stretched 3.0 times or more in each of one direction and a direction orthogonal to the one direction in the film plane is more preferable. At this time, for the layer B, it is preferable to use an amorphous resin or to perform heat treatment at a temperature equal to or higher than the melting point of the layer B in the heat treatment step of film formation. In particular, from the viewpoint that the heat treatment temperature can be arbitrarily selected, it is more preferable to use an amorphous resin.

The resin layer used in the multilayer laminated film of the present invention is preferably a thermoplastic resin. The thermoplastic resins can be chain polyolefins such as polyethylene, polypropylene, poly(4-methylpentene-1), and polyacetal, alicyclic polyolefins that are produced from norbornene by ring-opening metathesis polymers, addition polymers, or addition copolymers with other olefins, biodegradable polymers such as polylactic acid and polybutyl succinate, polyamides such as nylon 6, nylon 11, nylon 12, and nylon 66, aramid, polymethyl methacrylate, polyvinyl chloride, polyvinylidene chloride, polyvinyl alcohol, polyvinyl butyral, an ethylene-vinyl acetate copolymer, polyacetal, polyglycolic acid, polystyrene, styrene-copolymerized polymethyl methacrylate, polyesters such as polycarbonate, polypropylene terephthalate, polyethylene terephthalate, polybutylene terephthalate, and polyethylene-2,6-naphthalate, polyethersulfone, polyetheretherketone, modified polyphenylene ether, polyphenylene sulfide, polyetherimide, polyimide, polyarylate, a tetrafluoroethylene resin, a trifluoroethylene resin, a trifluorochloroethylene resin, a tetrafluoroethylene-hexafluoropropylene copolymer, and polyvinylidene fluoride.

Of these, polyester and polymethyl methacrylate are more preferably used from the viewpoint of strength, heat resistance, transparency, refractive index difference, and versatility. These may be a copolymer or a mixture of two or more resins.

The polyester refers to a resin having a molecular structure in which a dicarboxylic acid unit and a diol unit are connected by an ester bond. As the polyester, a polyester having an aromatic dicarboxylic acid unit or an aliphatic dicarboxylic acid unit and a diol unit as main constituent units is preferable. Here, in the case of the dicarboxylic acid unit, the main constituent unit refers to a dicarboxylic acid unit contained in an amount of more than 50 mol% and 100 mol% or less when the total amount of dicarboxylic acid units constituting the polyester is 100 mol%, and the main constituent unit in the diol unit can also be interpreted in the same manner.

Here, examples of aromatic dicarboxylic acids constituting polyester include, for example, terephthalic acid, isophthalic acid, phthalic acid, 1,4-naphthalene dicarboxylic acid, 1,5-naphthalene dicarboxylic acid, 2,6-naphthalene dicarboxylic acid, 4,4'-diphenyl dicarboxylic acid, 4,4'-diphenyl ether dicarboxylic acid, and 4,4'-diphenylsulfone dicarboxylic acid. Examples of the aliphatic dicarboxylic acid include adipic acid, suberic acid, sebacic acid, dimer acid, dodecanedioic acid, cyclohexanedicarboxylic acid, and ester derivatives thereof. Of these, terephthalic acid and 2,6-naphthalene dicarboxylic acid that exhibit a high refractive index are preferable. These acid components may be used singly or two or more thereof may be used in combination, and they may be partly copolymerized with an oxyacid such as hydroxybenzoic acid.

Examples of the diol component include ethylene glycol, 1,2-propanediol, 1,3-propanediol, neopentyl glycol, 1,3-butanediol, 1,4-butanediol, 1,5-pentanediol, 1,6-hexanediol, 1,2-cyclohexanedimethanol, 1,3-cyclohexanedimethanol, 1,4-cyclohexanedimethanol, diethylene glycol, triethylene glycol, polyalkylene glycol, 2,2-bis(4-hydroxyethoxyphenyl) propane, isosorbate, and spiroglycol. Of these, polyalkylene glycol and ethylene glycol are preferably used. These diol components may be used singly or two or more thereof may be used in combination.

As the thermoplastic resin as a main component of each layer of the multilayer laminated film of the present invention, for example, among the above-mentioned polyesters, it is preferable to select polyethylene terephthalate or a polymer thereof, polyethylene naphthalate or a copolymer thereof, polybutylene terephthalate or a copolymer thereof, polybutylene naphthalate or a copolymer thereof, polyhexamethylene terephthalate or a copolymer thereof, polyhexamethylene naphthalate or a copolymer thereof, or polymethyl methacrylate or a copolymer thereof.

Furthermore, the thermoplastic resin may contain, to the extent that the properties of the resin do not deteriorate, various additives such as antioxidants, heat stabilizers, weather stabilizers, ultraviolet absorbers, organic lubricants, pigments, dyes, organic or inorganic fine particles, fillers, antistatic agents, and nucleating agents, alone or in combination of a plurality of components.

In the multilayer laminated film of the present invention, the saturation of transmitted light perpendicularly incident on the film surface is preferably 10 or less. In order to set the saturation of the transmitted light perpendicularly incident on the film surface to 10 or less, it is effective to enhance cancellation of reflection at each wavelength of 1/2 to 1/4 wavelengths and to realize uniform reflection over the entire reflection wavelength range of near infrared rays. In order to enhance cancellation of reflection at each wavelength of 1/2 to 1/4 wavelengths, as described above, it is preferable that the lamination ratio (A/B) be 0.8 or more and 1.3 or less (preferably 0.8 or more and 1.1 or less), the lamination ratio (C/B) be 0.8 or more and 1.3 or less (preferably 0.9 or more and 1.2 or less), and when the in-plane refractive indices of the layer A, the layer B, and the layer C are Na, Nb, and Nc, respectively, Nc satisfy $(Na \times Nc)^{1/2} \times 0.99 \leq Nb \leq (Na \times Nc)^{1/2} \times 1.01$. In addition, it is also effective to set the unit having the total layer thickness in the repeating unit of 250 nm or more and 630 nm or less to 80% or more of all the repeating units or the above preferable range because this leads to preventing generation of first-order reflection or higher order reflection in the visible light band.

When the saturation of transmitted light perpendicularly incident on the film surface is 10 or less, coloring when the background is viewed through the multilayer laminated film of the present invention can be suppressed, and visibility of the background can be enhanced. The saturation of the transmitted light can be calculated by calculating tristimulus values X, Y, and Z of the CIE1931 color system and tristimulus values Xn, Yn, and Zn of specific white light on the basis of JIS-Z-8781-3 (2016), determining a* and b* of the CIE1976L*a*b* color space on the basis of JIS-Z-8781-4 (2013) from the determined X, Y, and Z and Xn, Yn, and Zn, and calculating as a square root of the sum of squares of a* and b*.

In the multilayer laminated film of the present invention, the transmittance of visible light perpendicularly incident on the film surface is preferably 70% or more and 100% or less. Here, "the transmittance of visible light perpendicularly incident on the film surface (this means an angle of 0° to the normal line of the multilayer laminated film surface) being 70% or more and 100% or less" specifically means that an average transmittance of light having a wavelength of 400 to 700 nm perpendicularly incident on the multilayer laminated film of the present invention is 70% or more and 100% or less. Here, the visible light is not the above-described visible P-wave light but visible light including P waves and S waves. As described above, since the transmittance of light in a visible light range having a wavelength of 400 to 700 nm is high, the multilayer laminated film has transparency like transparent glass or a transparent resin film, and when the background is observed through the multilayer laminated film from a direction perpendicular to the surface of the multilayer laminated film, good visibility of the background can be obtained. From the above viewpoint, the transmittance is preferably 80% or more, and more preferably 90% or more. When the transmittance is 90% or more, a user can visually recognize the background without feeling the presence of the multilayer laminated film. The upper limit of the transmittance is preferably 99% from the viewpoint of ease of implementation.

The transmittance of light perpendicularly incident on the surface of the multilayer laminated film can be measured by measuring the transmittance of light having a wavelength of 400 to 700 nm at an incident angle θ of 0° in increments of 1 nm with a spectrophotometer and calculating an average value thereof.

A method for setting the transmittance of visible light perpendicularly incident on the film surface of the multilayer laminated film of the present invention to 70% or more and 100% or less will be described. By the multilayer laminated film of the present invention adopting an aspect in which units having a total layer thickness in the repeating unit of 250 nm or more and 630 nm or less are 80% or more of all the repeating units, only near infrared rays can be reflected (first-order reflection). In addition, in the repeating units, when the repeating units in which each of the lamination ratio (A/B) of the layer A to the total thickness of the layer B and the lamination ratio (C/B) of the layer C to the total thickness of the layer B is 0.8 or more and 1.3 or less are 80% or more and of all the repeating units, and the dielectric constant X is larger in the order of the layer A, the layer B, and the layer C, reflection at each wavelength of 1/2 to 1/4 wavelengths of the first-order reflection wavelength can be canceled. By adopting such an aspect, it is easy to set the transmittance of visible light perpendicularly incident on the film surface to 70% or more and 100% or less.

In the multilayer laminated film of the present invention, in a wavelength range of 850 nm to 1600 nm when light is incident on a film surface so that an angle formed with a normal line of the film surface is 10°, a reflectance is preferably 40% or more over at least a wavelength of 100 nm. When the multilayer laminated film of the present invention has a reflectance of 40% or more over at least a wavelength of 100 nm in a wavelength range of 850 nm to 1600 nm, near-infrared energy of the sun entering the inside of a vehicle or a room can be reflected to suppress an increase in temperature in the vehicle or the room when the multilayer laminated film is used for a window member of an automobile or a building. From the viewpoint of enhancing the effect of suppressing the temperature increase inside the vehicle or room, the reflectance is preferably 40% or more over at least a wavelength of 600 nm in the wavelength range of 850 nm to 1600 nm. The reflectance at each wavelength can be measured by a known spectrophotometer.

Examples of the method for setting the reflectance to 40% or more over at least a wavelength of 100 nm in the wavelength range of 850 nm to 1600 nm include an aspect in which the number of repeating units in which the total layer thickness in the repeating unit is 250 nm or more and 630 nm or less is 15 or more, and the in-plane refractive index difference between the layer A and the layer B and the in-plane refractive index difference between the layer B and the layer C are 0.03 or more. From the viewpoint of increasing the reflectance with a small number of repeating units, the in-plane refractive index difference between the layer A and the layer B and the in-plane refractive index difference between the layer B and the layer C are both 0.07 or more, and more preferably both 0.10 or more. From the same viewpoint, the in-plane refractive index difference between the layer A and the layer C is preferably 0.06 or more, more preferably 0.14 or more, and still more preferably 0.20 or more.

In the multilayer laminated film of the present invention, it is preferable that, when average reflectances of P waves in a visible-light band incident on a film surface at angles of 20°, 40°, and 60° to the normal line of the film surface are Rp20 (%), Rp40 (%), and Rp60 (%), respectively, a relationship of Rp20 ≤ Rp40 < Rp60 be satisfied. Such an aspect is an aspect that does not include an angle corresponding to the Brewster's angle. Therefore, by adopting such an aspect of the multilayer laminated film of the present invention, it becomes easy to make the reflectance of the P wave incident from the oblique direction relatively higher than the reflectance of the P wave incident from the front of the multilayer laminated film of the present invention, and when a light source that emits the P waves is used as a light source for emitting a moving image, the moving image can be more clearly displayed. Note that the average reflectance of the P waves in the wavelength range of 400 to 700 nm can be measured by measuring the reflectances of the P waves in the band in increments of 1 nm with a spectrophotometer and calculating the average value (details of the measurement method will be described later).

In order to satisfy the relationship of Rp20 ≤ Rp40 < Rp60, it is effective to adopt an aspect in which the film is constituted by a combination of the layer A, the layer B, and the layer C that are crystalline/amorphous/amorphous thermoplastic resin layers, respectively, the number of repeating units is 90 or more, the plane orientation coefficient of the layer A is 0.18 or more, and in the dielectric constant X of the layer B, the ratio of the dielectric constant in the in-plane direction and the dielectric constant in the out-of-plane direction is 10% or less. These methods can be used in appropriate combination. By using the above-described method, as shown in Fig. 4, the difference between Nb$\theta$ and (Na$\theta \times$ Nc$\theta$)$^{1/2}$ increases as the incident angle increases in the oblique direction from 0°. That is, as the incident angle increases in the oblique direction from 0°, the reflection of the P waves having 1/2 to 1/4 wavelengths becomes stronger, and it becomes easy to satisfy Rp20 ≤ Rp40 < Rp60.

In the multilayer laminated film of the present invention, the saturation of the reflected light of the P wave incident at an angle of 60° to the normal line of the film surface is preferably 20 or less, and more preferably 5 or less. Hereinafter, the "saturation of the reflected light of the P wave incident at an angle of 60° to the normal line of the surface of the multilayer laminated film" may be referred to as "saturation of the reflected light of the P wave". The fact that the saturation of the reflected light of the P wave is 20 or less means that uniform reflection can be realized over the entire wavelength range of visible light, and coloring caused by the reflected light can be suppressed by adopting such an aspect. Therefore, in the case of using the multilayer laminated film as a projection member of the projected image display device or the like, the color of the projected image displayed when the projected image is projected with the P waves is reproduced as substantially the same color as the moving image emitted from the display.

An example of a method of setting the saturation of the reflected light of the P wave to 20 or less will be described with reference to Fig. 6. Fig. 6 shows an example of an ideal layer thickness distribution of the layer A, the layer B, and the layer C from a position 1 of the layer on the film surface to a position 601 of the layer on the opposite film surface, and reference numerals 28 to 30 in Fig. 6 sequentially represent the thickness of the layer A, the thickness of the layer C, and the thickness of the layer B. As shown in Fig. 6, by arrangement to uniformize the thickness of the layer A, the thickness of the layer B, and the thickness of the layer C that reflect light of the wavelength range of 850 nm to 1750 nm according to the formula (A), the standard deviation of the reflectances in the wavelength band can be set to 10% or less, and the standard deviation of the reflectances in each wavelength band of 1/2 to 1/4 wavelengths of the wavelength band in which the visible light range is the reflection band can also be set to 10% or less. As a result, the saturation of the reflected light of the P wave can be easily set to 20 or less.

In formation of a multilayer laminated film, an error from the ideal layer thickness as shown in Fig. 6 actually occurs due to the influence of the design accuracy of the device, the operation stability of the film formation apparatus, and the like, but if the error obtained by averaging the errors at the respective layer positions from the layer position 1 to the layer position 601 from a layer 1 to a layer 601 is within about ±10%, the saturation of the reflected light of the P wave can be set to 20 or less. Here, a method for suppressing an error in thickness will be described. A multilayer lamination structure can be obtained by melting each of three types of thermoplastic resins, laminating a plurality of repeating units having layers arrayed in the order of layer A/layer B/layer C/layer B using a laminating apparatus, and melt-extruding a molten laminate into a sheet shape with a T-shaped die or the like, but suppression of disturbance of the layers of the molten laminate leads to suppression of an error in thickness. Examples of the method include providing a thick layer on the outermost layer of the molten laminate. The thickness of the outermost layer is preferably 1% or more and more preferably 4% or more with respect to the thickness of the entire molten laminate. It is more preferable to increase the thickness of not only one outermost layer but also both outermost layers.

In addition, in order to set the saturation of the reflected light of the P wave to 20 or less and achieve uniform reflection over the entire wavelength range of visible light, it is also preferable that the wavelength range in which the reflectance is 40% or more when light is incident on the film surface such that the angle formed with the normal line of the film surface is 10° include at least a range of 850 nm or more and 1600 nm or less. This is because the reflection wavelength of the P wave incident at an angle of 60° to the normal line of the film surface is in the range of 1/2 to 1/4 wavelengths of the first-order reflection wavelength, and thus when the first-order reflection wavelength band is narrow, the reflection band of 1/2 to 1/4 wavelengths of the first-order reflection is also narrowed, so that only a part of the wavelength in the visible light range is reflected, and the saturation of the reflected light of the P wave is increased.

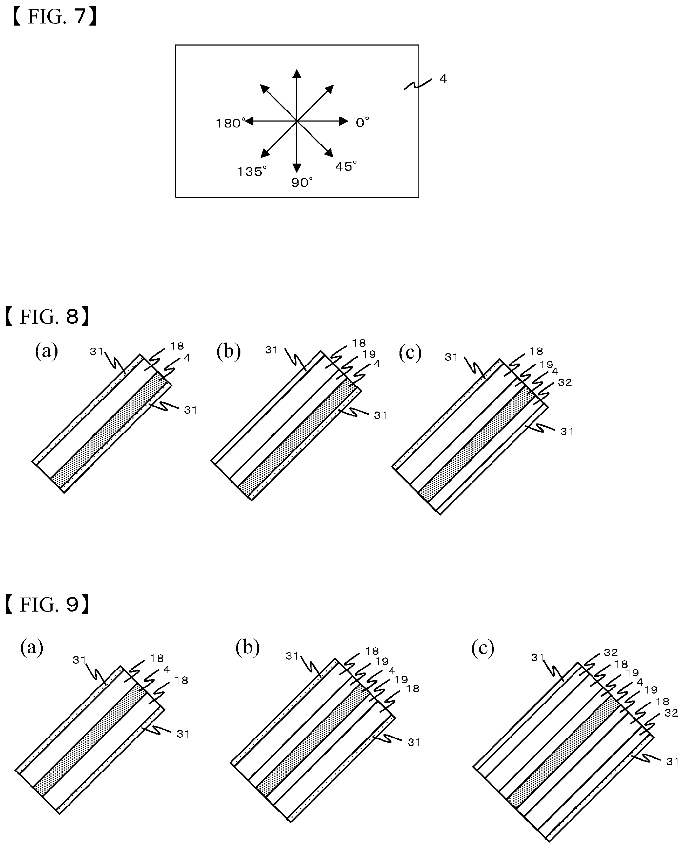

In the multilayer laminated film of the present invention, it is preferable that, when an average reflectance of the P wave in a visible-light band incident on a film surface at an angle of 60° to the normal line of the film surface is Rp60 (%), azimuth angle variation of Rp60 be 10% or less. Here, as shown in Fig. 7, the azimuth angle refers to each azimuth angle (0°, 45°, 90°, 135°, and 180°) when the azimuth angle in the main orientation axis direction is 0° in the plane of the film surface of the multilayer laminated film 4 constituting a laminate of the present invention. The main orientation axis direction refers to a direction having the largest degree of orientation in the plane of the film. The degree of orientation can be measured by a known molecular orientation meter, and as the molecular orientation meter, for example, a molecular orientation meter MOA-7015 of Oji Scientific Instruments, or the like can be used. The azimuth angle variation refers to a difference between the maximum value and the minimum value of values of Rp60 (0°), Rp60 (45°), Rp60 (90°), Rp60 (135°), and Rp60 (180°) measured at the azimuth angles (0°, 45°, 90°, 135°, and 180°).

Rp60 (0°), Rp60 (45°), Rp60 (90°), Rp60 (135°), and Rp60 (180°) can be measured by measuring the reflectance of P wave in a wavelength of 400 to 700 nm at an incident angle θ of 60° in increments of 1 nm using a spectrophotometer and calculating an average value thereof. Here, as the azimuth angle which is the inclination direction, the azimuth angle in the main orientation axis direction of the multilayer laminated film is set to 0°, and based on this, five angles of 0°, 45°, 90°, 135°, and 180° clockwise are adopted. When the azimuth angle variation of Rp60 is 10% or less, the display property such as brightness of information can be maintained at the same level regardless of the direction in which the moving image is projected.

In order to reduce the azimuth angle variation of Rp60, for example, the refractive index unevenness in the in-plane direction of the multilayer laminated film of the present invention is reduced, and in order to reduce the refractive index unevenness in the in-plane direction of the film, for example, the film is stretched so as to reduce the difference in the orientation state between the film longitudinal direction and the film width direction during biaxial stretching of the film. The stretching conditions for reducing the difference in orientation state between the longitudinal direction and the width direction vary depending on the thermoplastic resin to be used and the combination thereof, but in the case of using polyester for the layer A, for example, a condition in which the stretching ratio in the width direction is slightly higher than that in the longitudinal direction, more specifically, the difference therebetween is set to 0.8 times or less is a preferable example. This effect is one of the features of the multilayer laminated film of the present invention, and is an effect that cannot be achieved by a polarizing reflection film.

In the multilayer laminated film of the present invention, it is preferable that in a layer having a layer thickness in the multilayer laminated film of 1000 nm or less, the ratio: T (T = DA/DB) of the total layer thickness (DA) of the layer A to the total thickness (DB) of the layer B satisfy $0.80 \leq T \leq 1.00$, and the ratio: S (S = DC/DB) of the total thickness (DC) of the layer C to the total thickness of the layer B satisfy $1.10 \leq S \leq 1.30$. When T and S of the multilayer laminated film of the present invention take the above values, the average reflectance of the visible P-wave light incident at an angle of 60° to the normal line of the film surface can be efficiently increased while the transmittance of visible light incident perpendicularly to the film surface is kept high. In addition, since the average reflectance of the visible P-wave light incident at an angle of 60° to the normal line of the film surface becomes high, it becomes easy to satisfy Rp20 ≤ Rp40 < Rp60. In the case of a configuration as in the multilayer laminated film of the present invention in which the dielectric constant X (that is, related to the refractive index) in the descending order is $X_A > X_B > X_C$, the canceling effect of reflection of 1/2 to 1/4 wavelengths in the oblique direction is weakened by S taking a value larger than T. That is, the average reflectance of the visible P-wave light incident at an angle of 60° to the normal line of the film surface can be increased efficiently.

On the other hand, when S is excessively increased or T is excessively decreased in order to make S larger than T, the canceling effect of reflection at 1/2 to 1/4 wavelengths is weakened not only in the oblique direction but also in the front direction (perpendicular to the film surface), so that the transmittance of visible light perpendicularly incident on the film surface may decrease, and the saturation of transmitted light perpendicularly incident on the film surface may increase. Therefore, the lower limit of T is preferably 0.80, and the upper limit of S is preferably 1.30. On the other hand, when S takes a value smaller than T, the canceling effect of reflection from 1/2 to 1/4 wavelengths in the oblique direction is enhanced, and the average reflectance of the visible P-wave light incident at an angle of 60° to the normal line of the film surface may become small. Therefore, the upper limit of T is preferably 1.00, the lower limit of S is preferably 1.10, and when S exceeds 1.10, Rp20 ≤ Rp40 < Rp60 may not be satisfied.

Hereinafter, preparation of the multilayer laminated film of the present invention will be specifically described with an example, but the multilayer laminated film of the present invention is not limited thereto. When the multilayer laminated film of the present invention has the configuration of the multilayer laminated film described above, the lamination structure can be prepared by the following method.

First, a first thermoplastic resin, a second thermoplastic resin, and a third thermoplastic resin are supplied in a molten state from three extruders of an extruder A corresponding to the layer A, an extruder B corresponding to the layer B, and an extruder C corresponding to the layer C, and, using the molten thermoplastic resins from respective flow paths, by a multi-manifold type feed block and a square mixer, which are known laminating apparatuses, or only a comb type feed block, a plurality of repeating unit structures in which three types of resin layers (layer A, layer B, layer C) are arrayed in the order of layer A/layer B/layer C/layer B are laminated. Then, the molten laminate is melt-extruded into a sheet shape with a T-shaped die or the like, and then cooled and solidified on a casting drum to obtain an unstretched multilayer laminated film. Each resin may be dried in hot air or under vacuum or nitrogen atmosphere as necessary before being supplied to the extruder.

In particular, in order to efficiently obtain a multilayer lamination structure, it is preferable to use a feed block having fine slits. When such a feed block is used, the apparatus does not become extremely upsized, and therefore amount of foreign matters generated due to thermal degradation is small, and it is possible to perform lamination with high accuracy even when the number of laminate layers is extremely large. Moreover, the precision of lamination in the width direction is also significantly improved as compared with conventional technology. In this apparatus, since the thickness of each layer can be adjusted by the shape of the slit (length, width), any layer thickness can be achieved. The molten multilayer laminated sheet thus formed into a desired layer configuration is guided to a die, and cooled and solidified on a casting drum to obtain an unstretched multilayer laminated film.

Subsequently, the unstretched multilayer laminated film is stretched and heat-treated. As a stretching method, it is preferable to employ a known sequential biaxial stretching method or a simultaneous biaxial stretching method. The stretching temperature is preferably in a range of the glass transition temperature or higher of the unstretched laminated film and the glass transition temperature + 80°C or lower. The glass transition temperature can be measured in accordance with JIS-K-7122 (2012). When the unstretched multilayer laminated film has a plurality of glass transition temperatures, the stretching temperature is preferably in the range from the highest glass transition temperature or higher to the glass transition temperature + 80°C or lower. The stretching ratio is preferably in a range of 2.0 to 8.0 in each of the longitudinal direction and the width direction, and more preferably in a range of 3.0 to 6.0. It is preferable to reduce the difference between the stretching ratio in the longitudinal direction and the stretching ratio in the width direction, more specifically, to set to 0.8 or less. The stretching in the longitudinal direction is preferably performed using a circumferential speed difference between rolls of a longitudinal stretching machine. The subsequent stretching in the width direction is preferably performed using a known tenter method. That is, the uniaxially stretched multilayer laminated film can be stretched in the width direction by conveying the uniaxially stretched multilayer laminated film while holding both ends in the width direction with clips and widening the distance between the opposing clips in the width direction.

It is also preferable to perform simultaneous biaxial stretching with a tenter. A case where simultaneous biaxial stretching is performed is described below. The unstretched laminated film cast on the cooling roll is guided to a simultaneous biaxial tenter, conveyed while both ends in the width direction of the film are held with clips, and stretched simultaneously and/or stepwise in the longitudinal direction and the width direction. The stretching in the longitudinal direction can be achieved by increasing the distance between the clips on the same side, and the stretching in the width direction can be achieved by increasing the distance between the rails on which the clips run to widen the distance between the opposing clips. The tenter clips for performing the stretching and the heat treatment in the present invention are preferably driven by a linear motor system. Other devices using pantographs, screws, etc., are available, but the use of linear motors is preferred because they allow the clips to have a high degree of freedom so that the stretching ratio can be changed as desired.

It is also preferable to perform heat treatment after stretching. The heat treatment is preferably performed at a heat treatment temperature in a range of the stretching temperature or higher and the melting point of the thermoplastic resin of the layer A or lower, and it is also preferable to perform the cooling step at a temperature in a range of the heat treatment temperature - 30°C or lower after the heat treatment. The melting point is measured according to JIS-K-7122 (2012). In addition, it is also preferable to reduce the dimension of the film (relax the film) in the width direction and/or the longitudinal direction during the heat treatment step or the cooling step in order to reduce the thermal shrinkage of the film. The relaxation proportion is preferably in a range of 1% to 10%, and more preferably in a range of 1 to 5%. Finally, the film is wound with a winding machine to manufacture the multilayer laminated film of the present invention.

In the projected image display member of the present invention, the multilayer laminated film of the present invention is located on at least one surface of the transparent support or between the transparent members. Hereinafter, a specific example of an aspect of the projected image display member of the present invention will be described. Figs. 8(a) and 8(b) show a configuration in which an optional antireflection layer 31 is laminated on the multilayer laminated film of the present invention, and Fig. 8(c) shows a configuration in which the optional antireflection layer 31 and functional layer 32 are laminated on the multilayer laminated film of the present invention. The antireflection layer 31 is a layer that prevents reflection of the surface of the projected image display member, and is preferably located on at least one surface of the multilayer laminated film 4. As shown in Fig. 8(a), since the antireflection layer 31 is provided on at least one surface of the multilayer laminated film 4, oblique reflection of the S wave on the surface of the projected image display member can be suppressed. As a result, in the case of using the projected image display member of the present invention as a projection member of an augmented reality device, it is possible to suppress reflection of surrounding scenery other than the moving image.

As shown in Fig. 8(c), the projected image display member also preferably has an aspect in which the functional layer 32 is provided on at least one surface of the multilayer laminated film 4. Examples of the functional layer 32 include a hard coat layer, an abrasion resistant layer, a scratch preventing layer, an antireflection layer, a color correction layer, an ultraviolet absorbing layer, a light stabilizing layer, a heat ray absorbing layer, a printing layer, a gas barrier layer, and an adhesive layer, and these layers may have a single layer configuration or a multilayer configuration, and one layer may have a plurality of functions.

Examples of another aspect include a laminate (Figs. 9(a) to 9(c)) in which the multilayer laminated film 4 is located between the transparent supports 18. Here, the antireflection layer 31 and the functional layer 32 are optionally laminated. Examples of the transparent support 18 include glass and a transparent resin substrate, and the thickness of the transparent support is preferably 0.3 mm or more and more preferably 1 mm or more in order to provide support properties. The upper limit of the thickness of the transparent support 18 is not particularly limited, but is preferably 10 mm or less because the weight of the projected image display member unnecessarily increases when the thickness of the transparent support is excessively large. The transparent support 18 can have not only a flat plate shape but also a curved surface shape. As the glass of the transparent support 18, not only a single layer glass but also a laminated glass or a tempered glass used for a windshield, a side glass, a rear glass or the like of an automobile, a plate glass of a glass building material, a tempered glass, a multilayer glass, a vacuum glass or the like can be used. As the transparent resin substrate of the transparent support 18, polyethylene terephthalate, polycarbonate, acrylic, polyvinyl chloride, polyethylene, polypropylene, polymethylpentene and a copolymer thereof, an acrylonitrile-butadiene-styrene copolymer, and the like are preferable. These transparent resin substrates may be a single component or a mixture of two or more kinds thereof. Of these, in the projected image display member of the present invention, an aspect in which the transparent support contains at least any of glass, polycarbonate resin, and acrylic resin is more preferable from the viewpoint of transparency, durability, and support properties. For the same reason, the thickness of the projected image display member is preferably 0.5 mm or more and 7 mm or less.

As a method of laminating the transparent support 18 and the multilayer laminated film 4, the transparent support 18 and the multilayer laminated film 4 may be directly bonded as in Fig. 8(a) and Fig. 9(a), but as shown in Fig. 8(b) and 8(c) and Fig. 9(b) and 9(c), bonding by forming the adhesive layer 19 using a pressure-sensitive adhesive, an adhesive, or the like is also possible. Examples of the pressure-sensitive adhesive and the adhesive include vinyl acetate resin-based, vinyl chloride-vinyl acetate copolymer-based, ethylene-vinyl acetate copolymer-based, polyvinyl alcohol, polyvinyl butyral, polyvinyl acetal, polyvinyl ether, nitrile rubber-based, styrene-butadiene rubber-based, natural rubber-based, chloroprene rubber-based, polyamide-based, epoxy resin-based, polyurethane-based, acrylic resin-based, cellulose-based, polyvinyl chloride, polyacrylic acid ester, and polyisobutylene adhesives. These pressure-sensitive adhesive and adhesive may be used alone or in combination of a plurality of kinds thereof, and a pressure-sensitive adhesiveness adjusting agent, a plasticizer, a heat stabilizer, an antioxidant, an ultraviolet absorber, an antistatic agent, a lubricant, a colorant, a crosslinking agent, and the like may be added.

Examples of the form of these adhesives before processing include a liquid form, a gel form, a lump form, a powder form, and a film form. Examples of a method of solidifying the adhesive layer include solvent volatilization, moisture curing, heat curing, mixing with a curing agent, anaerobic curing, ultraviolet curing, heat-melting and cooling, and pressure sensitivity. Examples of a lamination method include laminate molding, injection molding, vacuum molding, pressure molding, and vacuum and pressure combined molding, and the projected image display member is produced using heating, pressing, and the above-mentioned method of solidifying the adhesive layer.

Next, the projected image display device using the multilayer laminated film of the present invention will be described. The projected image display device of the present invention includes the multilayer laminated film of the present invention or the projected image display member of the present invention, and is a projected image display device including a moving image projection device (light source) that irradiates a display surface thereof with light.

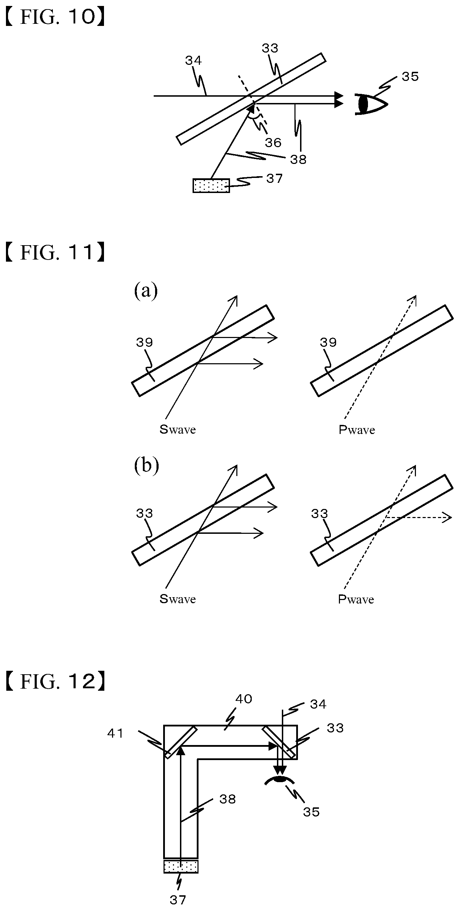

Another usage form of the projected image display device using the multilayer laminated film or the projected image display member of the present invention is a projected image display device shown in Fig. 10. The projected image display device of the present invention shown in Fig. 10 emits a projected image 38 from a moving image projection device 37 to a projected image display member 33, and causes the moving image to be projected on the projected image display member 33. By causing a background 34, which is information on surrounding scenery, to pass through the projected image display member 33, eyes 35 of the user of the projected image display device can visually recognize the moving image and the surrounding scenery in an overlapping manner. Examples of the moving image projection device 37 include a liquid crystal projector, an RGB laser, digital light processing (DLP), liquid crystal on silicon (LCOS), a liquid crystal display, and an organic EL display.

From the viewpoint of reducing the generation of a double image and reducing the decrease in visibility when the polarized sunglasses are worn, the intensity of the P wave in the intensity of light incident on the display surface of the projected image display member (intensity of P wave/(intensity of P wave + intensity of S wave)) is preferably 51% or more. The intensity of the P wave in the intensity of light incident on the display surface of the projected image display member may be simply referred to as "intensity of the P wave". Hereinafter, the problem of the generation of the double image and the decrease in visibility when the polarized sunglasses are worn, which are problems of the projected image display device, will be described with reference to the drawings. As shown in Fig. 11(a), a conventional projected image display member 39 using glass or a transparent resin film reflects the S wave incident obliquely and transmits the P wave. Therefore, the S wave is used as light of the projected image incident on the display surface of the projected image display member. As for the double image, when the light is reflected by the front surface and the back surface of the image display member 39, and the light beam is shifted, a phenomenon that the display image looks double occurs.

In addition, the decrease in visibility when the polarization sunglasses are worn occurs because, since the projected image projected on the projected image display member is derived from the S waves, when the projected image is visually recognized through the polarization sunglasses that absorb the S waves, the light of the projected image is absorbed by the polarization sunglasses. Since the projected image display member 33 (Fig. 11(b)) of the present invention reflects the P wave incident obliquely, the P wave can be used as light of the projected image incident on the display surface of the projected image display member. Since the P wave is reflected only inside the film and is not reflected on the front and back surfaces of the projected image display member, the problem of the double image is reduced. In addition, since the P wave is transmitted through the polarization sunglasses, a decrease in visibility of the projected image by the polarization sunglasses is also reduced. From the above viewpoint, the intensity of the P wave is preferably 51% or more and more preferably 90% or more, and the upper limit is about 99.9% from the viewpoint of polarized light control accuracy. In the projected image display device of the present invention, when the intensity of the P wave is 51% or more, the incident angle (reference numeral 36 in Fig. 10) of the projected image from the light source is preferably 30° or more, more preferably in the range of 50° to 75° with respect to the normal line of the projected image display member. Here, the incident angle in a case where even a part of the projected image display member has a curved surface shape is an angle with respect to the tangential plane at a point where the projected image on the projected image display member is incident. Examples of a method of increasing the intensity of the P wave include a method of designing the light source such that a moving image emitted from the light source is of P waves, and a method of installing a retardation plate or a polarizing plate on a light beam between the light source and the projected image display member for a moving image emitted from the light source toward the projected image display member.

The multilayer laminated film or the projected image display member of the present invention can be used as a retardation plate. Examples of the retardation plate include a 1/2 retardation plate and a 1/4 retardation plate. The 1/2 retardation plate can change the orientation of linearly polarized light. Therefore, when the moving image is linearly polarized light, the 1/2 retardation plate is used, so that the orientation of the linearly polarized light of the moving image after passing through the 1/2 retardation plate can be controlled to be P waves with respect to the projected image display member. The 1/4 retardation plate can change circularly polarized light into linearly polarized light. Therefore, when the moving image is circularly polarized light or elliptically polarized light, the 1/4 retardation plate is used, so that the orientation of the linearly polarized light of the moving image after passing through the 1/4 retardation plate can be controlled to be P waves with respect to the projected image display member. The polarizing plate can pass linearly polarized light in only a specific orientation, and can absorb or reflect linearly polarized light in other orientations. Therefore, the polarizing plate is used, so that the orientation of the linearly polarized light after passing through the polarizing plate can be controlled to be P waves with respect to the projected image display member.

An example of another usage form of the projected image display device using the multilayer laminated film or the projected image display member of the present invention is to be mounted on the head, and more specifically, a glasses-type form and the like. Fig. 12 shows an embodiment of the projected image display device of the present invention. In the projected image display device of Fig. 12, the projected image 38 emitted from the moving image projection device 37 passes through a light guiding member 40, is reflected by a reflecting member 41, and is reflected by the projected image display member 33, whereby the moving image is projected on the eyes 35 of a user of the projected image display device while the visibility of the background 34 is secured. Examples of the reflecting member 41 include a mirror in which a metal layer or a dielectric multilayer film is provided on a surface of a support, and a multilayer laminated film in which thermoplastic resins having different refractive indices are alternately laminated. As the light guiding member 40, it is preferable that the absorption of the projected image be small, the light guiding member be transparent, and the phase difference be small in order not to disturb the polarized light of the projected image, and polyethylene terephthalate, polycarbonate, acryl, polyvinyl chloride, polyethylene, polypropylene, cycloolefin, polymethylpentene and a copolymer thereof, an acrylonitrile-butadiene-styrene copolymer, and the like are preferable.

Hereinafter, a transportation system of the present invention will be described. The transportation system of the present invention includes the projected image display device, and at least a part of light emitted from the light source toward the projected image display member described above is incident on the projected image display member at an angle of 50° to 75° to the normal line of the projected image display member. Preferable examples of the transportation system include an automobile, a railway vehicle, and an aircraft. In particular, an automobile including a projected image display device using the projected image display member of the present invention on any one or more of a windshield, a side glass, and a rear glass is preferable. With such an aspect, it is possible to suppress a double image, and moving image visibility for the driver is improved. Here, the incident angle in a case where even a part of the projected image display member has a curved surface shape is an angle with respect to the tangential plane at a point where the projected image on the projected image display member is incident.

In addition, the transportation system of the present invention preferably includes a projected image display device in which the radius of curvature of the center of the projected image display member in the horizontal direction is 1 m or more and 8 m or less. Here, the center of the projected image display member means the center of gravity. Since the projected image display member has a curvature in the horizontal direction, the distances from the passengers of the transportation system to the projected image display member become closer to an equal distance as compared with the case where the projected image display member has a flat plate shape, and thus, the focal distance of each projected image is visually recognized at the equal distance, so that the moving image can be visually recognized without discomfort.

A building of the present invention will be described below. The building of the present invention includes the projected image display device of the present invention. The projected image display device of the present invention is preferably used for a window of a building, transparent signage in a building, spatial presentation, and the like.

EXAMPLES

Hereinafter, the multilayer laminated film and the projected image display member of the present invention will be described in more detail using Examples. However, the multilayer laminated film and the projected image display member of the present invention are not limited to the following aspects.

[Methods for measurement of physical properties and methods for evaluation of effects]

The method for measurement of properties and the method for evaluation of effects are as follows.

(1) Number of laminate layers in multilayer laminated film, number of repeating unit structures, thickness of surface layers, and layer thickness inside multilayer laminated film

A sample obtained by cutting out a cross section parallel to the thickness direction (direction perpendicular to the film surface) using a microtome was observed using a transmission electron microscope (TEM) to confirm the number of laminate layers in the multilayer laminated film, the number of repeating unit structures, the thickness of the surface layers, and the layer thickness inside the multilayer laminated film. The cross-sectional photograph was taken under the condition of an acceleration voltage of 100 kV using a transmission electron microscope JEM1400Plus (manufactured by JEOL Ltd.) after dyeing the sample with $RuO_4$. The thickness of the surface layers of the multilayer laminated film was measured by measuring the obtained TEM image using image processing software Image-Pro ver. 10. For the layer thickness inside the multilayer laminated film, the obtained TEM image was read as numerical data on the relationship between the position in the thickness direction and the average brightness of the region sandwiched between two lines in the width direction in a vertical thick profile mode using the image processing software Image-Pro ver. 10, and the read data was subjected to 5-point moving average numerical processing on position (nm) and brightness data using spreadsheet software "Excel" (registered trademark) (Microsoft Office365 version 2022). Furthermore, the obtained data with periodically changing brightness was differentiated, the maximum value and the minimum value of the differential curve were read by a visual basic for applications (VBA) program, and the interval between the maximum value and the minimum value adjacent to each other was regarded as a layer thickness of one layer to calculate the layer thickness. This operation was performed for each image, and the layer thickness of all the layers was calculated to determine the layer thickness inside the multilayer laminated film.

(2) Proportion of units having total layer thickness of 250 nm to 630 nm or less in repeating unit

The total layer thickness in each repeating unit was determined using the layer thickness inside the multilayer laminated film determined in the item (1), and the number of repeating units having a total layer thickness in each repeating unit of 250 nm to 630 nm or less was divided by the number of all units to determine the proportion (%).

(3) Lamination ratio (A/B) and lamination ratio (C/B) in repeating unit

Using the layer thickness inside the multilayer laminated film determined in the item (1), in each repeating unit, the lamination ratio (A/B) was determined by dividing the thickness of the layer A by the total thickness of the layers B in the unit, and the lamination ratio (C/B) was determined by dividing the thickness of the layer C by the total thickness of the layers B in the unit. The number of repeating units in which each of the obtained lamination ratio (A/B) and lamination ratio (C/B) is 0.8 or more and 1.3 or less was divided by the number of all the units to determine the proportion (%). Similarly, the proportion (%) of units in which the lamination ratio (A/B) was 0.8 or more and 1.1 or less and the lamination ratio (C/B) was 0.9 or more and 1.2 or less was determined.

(4) Ratio of total layer thickness in layer having layer thickness of 1000 nm or less (T, S)

Using the layer thickness inside the multilayer laminated film determined in the item (1), in a layer having a layer thickness of 1000 nm or less, the ratio: T (T = DA/DB) of the total layer thickness (DA) of the layer A to the total thickness (DB) of the layer B, and the ratio: S (S = DC/DB) of the total thickness (DC) of the layer C to the total thickness of the layer B were determined.

(5) Measurement of dielectric constant X of layer A, layer B, and layer C and repeating unit structure

Electron energy loss spectroscopy measurement (EELS measurement) was performed to measure the dielectric constant X of each of the layer A, the layer B, and the layer C. A cut sample of a cross section (cross section in the thickness direction) to be measured was prepared by an ultrathin section method using an ultramicrotome with respect to the main orientation axis direction of a measurement target. The dielectric constant of the prepared cross-sectional cut sample was measured using an atomic resolution analytical electron microscope ARM200F manufactured by JEOL Ltd. Specifically, a high angle annular dark-field scanning transmission electron microscopy (HAADF-STEM) image was acquired at an acceleration voltage of 80 kV and a beam spot size of 0.2 mmφ, and then multipoint analysis (60 × 60 pixels, 20 nm/pixel) was performed on the layer to be measured at 50 msec, and thus data of energy loss and electron beam intensity were acquired. The same operation was performed at three points for each of the thermoplastic resin layers in the multilayer laminated film, and data with an improved S/N ratio were acquired. From the obtained spectrum, background correction caused by elastic scattering and removal of a multiple scattering effect were performed, and then a dielectric function of each layer was calculated by Kramers-Kronig conversion expressed by formula (C). The integration range in the Kramers-Kronig conversion was set to 0 to 200 eV. On the basis of the dielectric function of formula (C), the real part and the imaginary part of the dielectric constant were calculated from formulas (D) and (E), respectively, and then the dielectric constant X was calculated from formula (F) of the square root of the sum of squares of these. The order of the magnitude of the dielectric constant X of each of the layer A, the layer B, and the layer C was determined from the calculated dielectric constant X. In formulas (C) to (F), Re represents a real part, Im represents an imaginary part, P represents a Cauchy principal value, ε represents a dielectric constant (average value), ε(ω) represents a dielectric function, $\varepsilon_1$ represents a dielectric constant real part, $\varepsilon_2$ represents an imaginary part of a dielectric constant, and ω and ω' represent angular frequencies.

[Mathematical formula 3]

$$Re\left[\frac{1}{\varepsilon(\omega)}\right] = 1 - \frac{2}{\pi}P\int_0^\infty Im\left[\frac{1}{\varepsilon(\omega)}\right]\frac{\omega'}{\omega'^2-\omega^2}d\omega' \qquad (C)$$

[Mathematical formula 4]

$$\varepsilon_1(\omega) = \frac{Re\left[\frac{1}{\varepsilon(\omega)}\right]}{Re\left[\frac{1}{\varepsilon(\omega)}\right]^2 + Im\left[\frac{1}{\varepsilon(\omega)}\right]^2} \qquad (D)$$

[Mathematical formula 5]

$$\varepsilon_2(\omega) = \frac{Im\left[\frac{1}{\varepsilon(\omega)}\right]}{Re\left[\frac{1}{\varepsilon(\omega)}\right]^2 + Im\left[\frac{1}{\varepsilon(\omega)}\right]^2} \qquad (E)$$

[Mathematical formula 6]

$$\varepsilon = \sqrt{(\varepsilon_1)^2 + (\varepsilon_2)^2} \qquad (F)$$

In the measurement of the repeating unit structure, by comparing the dielectric constants X of the layer A, the layer B, and the layer C at the position of the measured layer with the contrast of the TEM image measured in the item (1) at the position of the layer, the layers respectively having three types of contrasts in the TEM image were determined as the layer A, the layer B, and the layer C, respectively, and it was confirmed that the layer A, the layer B, and the layer C were laminated as a unit structure of layer A/layer B/layer C/layer B.

(6) Transmittance

Using a spectrophotometer (U-4100 Spectrophotometer) manufactured by Hitachi, Ltd. in the normal mode (solid measurement system), transmittance in a wavelength of 240 to 2600 nm at incidence angles θ of 0° and 10° was measured in increments of 1 nm. (Measuring conditions: a slit of 2 nm (visible), automatic control (infrared), a gain of 2, and a scanning speed of 600 nm/min) From the measurement results, the average transmittance in a wavelength of 400 nm to 700 nm measured at an incident angle of 0° was determined as the transmittance of visible light perpendicularly incident on the film surface.

(7) Average reflectance of visible P-wave light incident at angle of 60° to normal line of film surface

An angle variable reflection unit and a Glan-Taylor polarizer as attachments were attached to a spectrophotometer (U-4100 Spectrophotometer) manufactured by Hitachi, Ltd., and the reflectance of P wave in a wavelength range of 380 to 780 nm at an incident angle θ of 60° was measured in increments of 1 nm. From the obtained reflectance, the average reflectance of the P wave in the wavelength range of 400 nm to 700 nm was determined. Here, the 60° inclination direction was coincident with the direction of the main orientation axis of the multilayer laminated film.

(8) Average reflectances Rp20, Rp40, and Rp60 of P wave

An angle variable reflection unit and a Glan-Taylor polarizer as attachments were attached to a spectrophotometer (U-4100 Spectrophotometer) manufactured by Hitachi, Ltd., and the reflectance of P wave in a wavelength range of 400 to 700 nm at incident angles θ of 20°, 40°, and 60°was measured in increments of 1 nm. From the obtained reflectances, Rp20, Rp40, and Rp60 were determined as average reflectances of the P wave in the wavelength range of 400 nm to 700 nm at incident angles of 20°, 40°, and 60°, respectively. Here, the 20°, 40°, and 60° inclination directions were coincident with the direction of the main orientation axis of the multilayer laminated film.

(9) Azimuth angle variation of average reflectances of P wave

An angle variable reflection unit and a Glan-Taylor polarizer as attachments were attached to a spectrophotometer (U-4100 Spectrophotometer) manufactured by Hitachi, Ltd., and the reflectance of P wave in a wavelength range of 400 to 700 nm at an incident angle θ of 60° was measured in increments of 1 nm with respect to each azimuth angle direction of five points of 0°, 45°, 90°, 135°, and 180° clockwise based on an azimuth angle of 0° in the sample main orientation axis direction. From the obtained reflectances, Rp60 (0°), Rp60 (45°), Rp60 (90°), Rp60 (135°), and Rp60 (180°) were determined as average reflectances of P wave in a wavelength range of 400 nm to 700 nm at an incident angle of 60° in each azimuth angle direction. Furthermore, the difference between the maximum value and the minimum value of the determined Rp60 (0°), Rp60 (45°), Rp60 (90°), Rp60 (135°), and Rp60 (180°) was defined as the azimuth angle variation.

(10) Saturation of reflected light of P wave incident at 60°

Tristimulus values X, Y, and Z of the CIE1931 color system and tristimulus values Xn, Yn, and Zn of specific white light were calculated on the basis of JIS-Z-8781-3 (2016), and, from the obtained X, Y, and Z and Xn, Yn, and Zn, a* and b* of the CIE1976L*a*b* color space were determined on the basis of JIS-Z-8781-4 (2013), to calculate a saturation C* value as a square root of the sum of squares of a* and b*.

<Calculation of tristimulus values X, Y, and Z and tristimulus values Xn, Yn, and Zn of specific white light>

The relative color stimulus function ($\varphi(\lambda)$) in JIS-Z-8781-3 (2016) was set as a product $\varphi(\lambda) = R(\lambda) \times S(\lambda)$ of a spectral reflectance factor ($R(\lambda)$) and a relative spectral distribution ($S(A)$) of the illumination light. Here, the spectral reflectance factor is the reflectance of the P wave having a wavelength of 380 nm to 780 nm at an incident angle of 60° obtained in the item (6). As a relative spectral distribution, a supplementary illuminant C of JIS-Z-8720 (2012) was used. Based on formula (G) of JIS-Z-8781-3 (2016) using the relative color stimulus function, the sum of products of the relative color stimulus function and the following CIE1931 color-matching functions (H) was multiplied by a normalization coefficient k in a wavelength of 380 nm to 760 nm and a wavelength interval of 5 nm to calculate tristimulus values X, Y, and Z. The tristimulus values Xn, Yn, and Zn of specific white light were calculated by multiplying the sum of the products of the relative spectral distribution and the CIE1931 color-matching functions (H) by a normalization coefficient k. In formula (G), $\lambda$ represents a wavelength, and $\Delta\lambda$ represents a wavelength interval.

[Mathematical formula 7]

$$X = k \sum_{\lambda} \phi(\lambda)\, \bar{x}(\lambda)\Delta\lambda$$
$$Y = k \sum_{\lambda} \phi(\lambda)\, \bar{y}(\lambda)\Delta\lambda \qquad (G)$$
$$Z = k \sum_{\lambda} \phi(\lambda)\, \bar{z}(\lambda)\Delta\lambda$$

[Mathematical formula 8]

$$\bar{x}(\lambda)、\ \bar{y}(\lambda)、\ \bar{z}(\lambda) \qquad (H)$$

(11) Saturation of transmitted light perpendicularly incident on film surface

Tristimulus values X, Y, and Z of the CIE1931 color system and tristimulus values Xn, Yn, and Zn of specific white light were calculated on the basis of JIS-Z-8781-3 (2016), and, from the obtained X, Y, and Z and Xn, Yn, and Zn, a* and b* of the CIE1976L*a*b* color space were determined on the basis of JIS-Z-8781-4 (2013), to calculate a saturation C* value as a square root of the sum of squares of a* and b*.

<Calculation of tristimulus values X, Y, and Z and tristimulus values Xn, Yn, and Zn of specific white light>

The relative color stimulus function ($\varphi(\lambda)$) in JIS-Z-8781-3 (2016) was set as a product $\varphi(\lambda) = T(\lambda) \times S(\lambda)$ of a spectral transmittance factor ($T(\lambda)$) and a relative spectral distribution ($S(\lambda)$) of the illumination light. Here, the spectral transmittance factor is the transmittance in a wavelength of 380 nm to 780 nm obtained in the item (6). As a relative spectral distribution, a supplementary illuminant C of JIS-Z-8720 (2012) was used. Based on formula (G) of JIS-Z-8781-3 (2016) using the relative color stimulus function, the sum of products of the relative color stimulus function and the following CIE1931 color-matching functions (G) was multiplied by a normalization coefficient k in a wavelength of 380 nm to 760 nm and a wavelength interval of 5 nm to calculate tristimulus values X, Y, and Z. The tristimulus values Xn, Yn, and Zn of specific white light were calculated by multiplying the sum of the products of the relative spectral distribution and the CIE1931 color-matching functions (G) by a normalization coefficient k.

(12) Near-infrared reflectance

Using a spectrophotometer (U-4100 Spectrophotometer) manufactured by Hitachi, Ltd. in the normal mode (solid measurement system), reflectance at an incidence angle θ of 10° in a wavelength of 240 to 2600 nm was measured in increments of 1 nm. (Measuring conditions: a slit of 2 nm (visible), automatic control (infrared), a gain of 2, and a scanning speed of 600 nm/min) From the obtained reflectance, the wavelength range in which the reflectance is 40% or more at the near-infrared wavelength and the average reflectance in the wavelength range were determined.

(13) Refractive index and plane orientation coefficient of layer A

The refractive index of the surface layers of the multilayer laminated film was measured using a prism coupler SPA-400 manufactured by Sailon Technology, Inc in a measurement laser wavelength of 633 nm. The in-plane refractive index (average value in the X direction and the Y direction) and the out-of-plane refractive index (average value in the X direction and the Z direction) of each of the main orientation axis direction (X direction) and the direction perpendicular to the main orientation axis direction (A direction parallel to the film surface is defined as a Y direction, and a direction perpendicular to the film surface is defined as a Z direction) of the film were determined. (In-plane refractive index) - (out-of-plane refractive index) was calculated and defined as the plane orientation coefficient.

(14) Ratio of dielectric constant in in-plane direction to dielectric constant in out-of-plane direction of layer B

The dielectric constant of the layer B in the out-of-plane direction was defined as the dielectric constant of the layer B obtained in the item (5). The dielectric constant of the layer B in the in-plane direction was determined by the following method. First, the dielectric constant was determined by electron energy loss spectroscopy measurement (EELS measurement) in the item (5) with respect to the normal direction of the surface of the multilayer laminated film, and defined as the dielectric constant in the in-plane direction of the layer A. For the resin used for the layer C, thermoplastic resin pellets vacuum-dried at 70°C for 48 hours were melted at 280°C, and then pressed with a press machine and quenched to prepare a sheet having a thickness of 200 μm. The dielectric constant was determined by electron energy loss spectroscopy measurement (EELS measurement) in the item (5) with respect to the normal direction of the sheet surface, and defined as the dielectric constant in the in-plane direction of the layer C. Subsequently, the surface of the multilayer laminated film was polished, and the dielectric constant was determined by the electron energy loss spectroscopy measurement (EELS measurement) in the item (5) with respect to the normal direction of the polished surface. When the dielectric constant was different from the dielectric constants of the layer A and the layer C in the in-plane direction, the dielectric constant was defined as the dielectric constant of the layer B in the in-plane direction. Here, being different from the dielectric constants of the layer A and the layer C in the in-plane direction is a case where there is a difference in dielectric constant of 3% or more. Polishing and dielectric constant measurement were continued until the dielectric constant measured by the above method became a value different from the dielectric constants in the in-plane direction of the layer A and the layer C, and when a value different from the dielectric constants in the in-plane direction of the layer A and the layer C was obtained, the value was defined as the dielectric constant in the in-plane direction of the layer B. The ratio ((in-plane direction - out-of-plane direction)/out-of-plane direction $\times$ 100 (%)) was calculated based on the obtained dielectric constants in the in-plane direction and the out-of-plane direction of the layer B.

(15) Discrimination of crystallinity/amorphousness of layer A, layer B, and layer C

5 mg of resin pellets used for the layer A, the layer B, and the layer C was weighed with an electronic balance and sandwiched between aluminum pans, and the temperature was raised from 25°C to 300°C at 20°C/min and measurement was performed using DSCvesta Smart Loader manufactured by Rigaku Corporation according to JIS-K-7122 (2012). The enthalpy of fusion (ΔHm) was determined from the obtained DSC data, and a layer using a resin having an enthalpy of fusion of 5 J/g or more was regarded as crystalline, and a layer using a resin having an enthalpy of fusion of less than 5 J/g was regarded as amorphous.

(16) Refractive index of layer C

Thermoplastic resin pellets vacuum-dried at 70°C for 48 hours were melted at 280°C, and then pressed with a press machine and quenched to prepare a sheet having a thickness of 200 $\mu$m, and the refractive index of the obtained sheet was measured in the same manner as in the item (13) using a prism coupler SPA-400 manufactured by Sairon Technology, Inc. Since the resin used for the layer C was amorphous, the refractive index of the sheet and the refractive index in the multilayer laminated film were considered to be the same.

(17) Refractive index of layer B

Since the layer B is a layer inside the multilayer laminated film, the refractive index was measured using a prism coupler SPA-400 manufactured by Sairon Technology, Inc. for the film of the layer B resin alone prepared under the same stretching conditions and heat treatment conditions as those of the multilayer laminated film instead of the multilayer laminated film. The wavelength of the laser used for the measurement was 633 nm, and the in-plane refractive index was an average value of values obtained on both surfaces of the film in each of the main orientation axis direction and the direction perpendicular to the main orientation axis direction. The out-of-plane refractive index was an average value of values determined on both surfaces of the film, each of the values being an average value of a value measured from the main orientation axis direction side and a value measured from the perpendicular direction side to the main orientation axis direction.

(18) Verification of refractive index of layer B of multilayer laminated film

The optical simulation of the reflectance was performed using the layer thickness of the multilayer laminated film determined in the item (1), the refractive index of the layer A of the multilayer laminated film determined in the item (13), the refractive index of the layer C determined in the item (16), and the refractive index of the layer B determined in the item (17), the optical simulation result was compared with the near-infrared reflectance measured in the item (12), and when the difference therebetween was ±3% or less, the refractive index of the layer B determined in the item (17) was regarded as the refractive index of the layer B of the multilayer laminated film. The optical simulation was performed by performing calculation by VBA program using a characteristic matrix method (Mitsunobu KOBIYAMA (2006), "Design of Thin-Film Optical Filters", Optronics Co., Ltd.) of the optical thin film.

(19) Main orientation axis direction

The degree of orientation was measured using a molecular orientation meter MOA-7015 manufactured by Oji Scientific Instruments, and the direction having the largest degree of orientation was taken as the main orientation axis direction.

(20) Evaluation of projected image display device

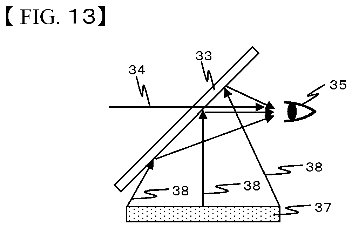

A display (SP-133CM) manufactured by DreamMaker. was used as a light source, and a projected image display member was installed at an angle of 45° with respect to the light source. The light emitted perpendicularly from the light source takes an incident angle of 45° to the normal direction with respect to the surface of the projected image display member. The intensity of the P wave (intensity of P wave/(intensity of P wave + intensity of S wave)) in the intensity of the moving image incident on the display surface of the projected image display member was adjusted by controlling the transmission axis direction of the polarizing plate installed immediately above the light source. As a moving image emitted from the light source, a white lattice image was used. Fig. 13 is a schematic diagram of an evaluation configuration. The moving image projected on the projected image display member was visually evaluated for each item according to the following criteria. Although the detailed configuration of the projected image display member 33 is not shown in Fig. 13, the projected image display members in Examples and Comparative Examples have the configurations shown in Table 3. In Fig. 13, reference numerals 33 to 35, 37, and 38 sequentially represent 33: projected image display member, 34: background, 35: eyes of projected image display device user, 37: moving image projection device, and 38: projected image.

(Display property of projected image at incident angle of 60°)

Determination was made according to the following criteria, and A and B were determined to be acceptable.

A: The projected image was very bright.
B: The projected image was bright.
C: The projected image was dark or not visible. (Double image visibility of projected image at incident angle of 60°)

Determination was made according to the following criteria, and A and B were determined to be acceptable. The double image here refers to a phenomenon that a projected image looks divided into two or more images, and a case of looking not only a double image but also a triple or more multiple image is treated as a double image.

A: No double image was visible.
B: A double image of a degree having no influence on the moving image visibility was observed.
C: A double image above the level of B was observed.
D: Since the projected image was not visible, the visibility of the double image could not be evaluated.

(Visibility of lattice image in projected image)

Determination was made according to the following criteria, and A and B were determined to be acceptable.

A: A lattice image without distortion was visually recognized.
B: A lattice image with large distortion was visually recognized.
C: A lattice image with very large distortion was visually recognized.
D: Since the projected image was not visible, the distortion of the lattice image could not be evaluated.

(Visibility of color of projected image)

Determination was made according to the following criteria, and A to C were determined to be acceptable.

A: Almost the same white color as the projected image was visually recognized.
B: A moving image in which the color slightly changed from white to a degree practically causing no problem was visually recognized.
C: The moving image in which the color changed from white was visually recognized.
D: Since the projected image was not visible, the visibility of the color could not be evaluated.

(Visibility of background)

Determination was made according to the following criteria, and A and B were determined to be acceptable.

A: The background was visible and clear.
B: The background was visible to a degree practically causing no problem.
C: The background was visible and dark to a degree exceeding the level of B.
D: The background was visible and dark to a degree practically causing a problem beyond the level of C, or the background was not visible.

(21) (Evaluation of heat shielding performance)

Using the transmittance at an incident angle of 10° measured in the item (6) and the reflectance at an incident angle of 10° measured in the item (12), a solar radiation heat acquisition rate (Tts) was calculated according to ISO 13837:2008 (E). Tts means a ratio (%) of the thermal energy of the sun having passed through the film or the projected image display member when the thermal energy of the sun incident on the film or the projected image display member is 100, and the lower the value, the higher the heat shielding performance. When this value was 80% or less, it was considered that there was heat shielding performance.

(22) Glass transition temperature and melting point of resin and unstretched multilayer laminated film

5 mg of thermoplastic resin pellets or an unstretched multilayer laminated film was weighed with an electronic balance and sandwiched between aluminum pans, and the temperature was raised from 25°C to 300°C at 20°C/min and measurement was performed using DSCvesta Smart Loader manufactured by Rigaku Corporation according to JIS-K-7122 (2012). From the resulting DSC data, the glass transition temperature (Tg) and melting point (Tm) were determined. The highest glass transition temperature of the unstretched multilayer laminated film is shown in Table 1.

[Thermoplastic resin used in film]

The following resins were used in the manufacture of the films used in Examples and Comparative Examples. All of the resins are thermoplastic resins. The resins A, B, F, G, and M are crystalline, and the resins C, D, E, H, I, J, K, and L are amorphous.

Resin A: copolymer of polyethylene naphthalate (polyethylene naphthalate obtained by copolymerizing polyethylene glycol having a molecular weight of 400 in an amount of 6 mol% with respect to the entire diol component), Tg = 93°C, Tm = 253°C.

Resin B: polyethylene terephthalate, Tg = 78°C, Tm = 254°C.

Resin C: copolymer of polyethylene terephthalate (polyethylene terephthalate obtained by copolymerizing a 2,6-naphthalene dicarboxylic acid component in an amount of 30 mol% with respect to the entire acid component), Tg = 95°C, Tm not observed.

Resin D: copolymer of polyethylene naphthalate (polyethylene naphthalate obtained by copolymerizing a paraxylylene glycol component in an amount of 35 mol% with respect to the entire diol component and polyethylene glycol having a molecular weight of 400 in an amount of 8 mol% with respect to the entire diol component), Tg = 87°C, Tm not observed.

Resin E: copolymer of polyethylene naphthalate (polyethylene naphthalate obtained by copolymerizing an isophthalic acid component in an amount of 30 mol% with respect to the entire acid component and polyethylene glycol having a molecular weight of 400 in an amount of 6 mol% with respect to the entire diol component), Tg = 73°C, Tm not observed.

Resin F: pellets obtained by blending pellets of Resin J and Resin B described later at a ratio of 60 mass%/40 mass%. Tg = 79°C, Tm = 243°C.

Resin G: copolymer of polyethylene terephthalate (polyethylene terephthalate obtained by copolymerizing an isophthalic acid component in an amount of 12 mol% with respect to the entire acid component), Tg = 75°C, Tm = 218°C.

Resin H: polymethyl methacrylate, Tg = 103°C, Tm not observed.

Resin I: copolymer of polyethylene terephthalate (polyethylene terephthalate obtained by copolymerizing a cyclohexanedicarboxylic acid component in an amount of 20 mol% with respect to the entire acid component and a spiroglycol component in an amount of 20 mol% with respect to the entire diol component), Tg = 76°C, Tm not observed.

Resin J: copolymer of polyethylene terephthalate (polyethylene terephthalate obtained by copolymerizing a cyclohexanedimethanol component in an amount of 33 mol% with respect to the entire diol component), Tg = 80°C, Tm not observed.

Resin K: copolymer of polyethylene naphthalate (polyethylene naphthalate obtained by copolymerizing an isophthalic acid component in an amount of 20 mol% with respect to the entire acid component and polyethylene glycol having a molecular weight of 400 in an amount of 5 mol% with respect to the entire diol component), Tg = 85°C, Tm = 215°C.

Resin L: copolymer of polyethylene terephthalate (polyethylene terephthalate obtained by copolymerizing a 2,6-naphthalene dicarboxylic acid component in an amount of 50 mol% with respect to the entire acid component), Tg = 105°C, Tm not observed.

Resin M: copolymer of polyethylene terephthalate (polyethylene terephthalate obtained by copolymerizing a cyclohexanedimethanol component in an amount of 18 mol% with respect to the entire diol component), Tg = 78°C, Tm = 220°C, $\Delta$Hm = 13 J/g.

(Manufacture of multilayer laminated film and film)

The multilayer laminated films and films were prepared as follows, the film formation conditions thereof are shown in Table 1, and the evaluation results are shown in Table 2.

(Example 1)

Resin A was used as the thermoplastic resin constituting the layer A, Resin C was used as the thermoplastic resin constituting the layer B, and Resin H was used as the thermoplastic resin constituting the layer C. Resin A, Resin C, and Resin H were respectively melted at 280°C with separate extruders, and five FSS type leaf disc filters were interposed, then the resins were weighted so that the discharge ratio was layer A/layer B = 1.42 and layer C/layer B = 1.05 with a gear pump and simultaneously laminated with a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° was 850 nm to 1750 nm according to formula (A), and to provide a lamination configuration of (layer A/layer B/layer C/layer B)n layer A (n is an integer representing the number of repeating units). The ratio of the discharge amount of the resins pushed out by the gear pump is generally called a lamination ratio, but since the discharge amount also includes the layer A as the outermost layer, the discharge amount of the layer A as the protective film increases.

Then, the molten laminate was fed to a T-die and molded into a sheet form, and then, while an electrostatic voltage of 8 kV was applied with a wire, the molded laminate was quenched and solidified on a casting drum having a surface temperature maintained at 25°C, and an unstretched multilayer laminated film was thereby obtained. This unstretched multilayer laminated film was longitudinally stretched (stretched in the longitudinal direction) at a temperature of 105°C and a stretching ratio of 3.6, and both surfaces thereof were subjected to a corona discharge treatment in air, and then an easily adhesive layer forming film coating liquid (a mixture obtained by mixing a polyester resin having a glass transition temperature of 18°C and a polyester resin having a glass transition temperature of 82°C at 1:1 (mass ratio), and further mixing 3 parts by mass of silica particles having an average particle size of 100 nm of primary particles with respect to the mixed resin) was applied by a bar coating method using #4 bar coating. The average particle size of the primary particles here is a value measured by a dynamic light scattering method. Thereafter, while both ends of the obtained uniaxially stretched multilayer laminated film in the width direction were held by clips, the film was guided to a tenter, and laterally stretched (stretched in the width direction ) at a temperature of 120°C at a stretching ratio of 4.2. In addition, the laterally stretched multilayer laminated film was subjected to heat treatment at 210°C and relaxation in the width direction by 1%, and cooled at 100°C to obtain a multilayer laminated film having a thickness of 71 μm (thickness of both surface layers: 5 μm). The evaluation results are shown in Table 2. The film thickness, the number of laminated layers, the surface layer thickness, and the lamination ratio were determined by adjusting the take-up speed of the casting drum, the number of slits of the feed block, the slit width of the feed block, and the discharge amount, and the resin of each layer, the number of layers, the thickness of the surface layers, the total thickness, the lamination ratio, and the film formation conditions were set as shown in Table 1. The results are shown in Table 2. The film thickness, the number of laminated layers, the surface layer thickness, and the lamination ratio were determined by adjusting the take-up speed of the casting drum, the number of slits of the feed block, the slit width of the feed block, and the discharge amount.

(Examples 2 to 18 and Comparative Examples 1 and 4 to 8)

Multilayer laminated films were obtained in the same manner as in Example 1, except that the resin of each layer, the number of layers, the thickness of the surface layers, the total thickness, the lamination ratio, and the film formation conditions were as shown in Table 1, and that a feed block having the following design was used. The evaluation results are shown in Table 2. The feed block used is as follows.

Feed block of Example 2: a 401-layer feed block (laminating apparatus) (the number of repeating units is 100, the layer A is 101, the layer B is 200, and the layer C is 100) designed to continuously change the layer thicknesses of the layer A, the layer B, and the layer C from one surface layer toward the opposite surface layer so that the reflection wavelength at an incident angle of 10° is 850 nm to 1700 nm according to formula (A), and to provide a lamination configuration of (layer A/layer B/layer C/layer B)n layer A (n is an integer representing the number of repeating units).

Feed block of Example 3: a 201-layer feed block (laminating apparatus) (the number of repeating units is 50, the layer A is 51, the layer B is 100, and the layer C is 50) designed to continuously change the layer thicknesses of the layer A, the layer B, and the layer C from one surface layer toward the opposite surface layer so that the reflection wavelength at an incident angle of 10° is 850 nm to 1650 nm according to formula (A), and to provide a lamination configuration of (layer A/layer B/layer C/layer B)n layer A (n is an integer representing the number of repeating units).

Feed block of Examples 4, 7, 9, 10, and 13 to 18 and Comparative Examples 1 and 6 to 9: The same feed block as in Example 1 was used.

Feed block of Examples 5 and 6: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° is 850 nm to 1650 nm according to formula (A), and to provide a lamination configuration of (layer A/layer B/layer C/layer B)n layer A (n is an integer representing the number of repeating units).

Feed block of Example 8: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° is 850 nm to 1400 nm according to formula (A), and to provide a lamination configuration of (layer A/layer B/layer C/layer B)n layer A (n is an integer representing the number of repeating units).

Feed block of Example 11: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° was 850 nm to 1750 nm according to formula (A), and to provide a lamination configuration of (layer A/layer B/layer C/layer B)n layer A (n is an integer representing the number of repeating units), in which, as for the lamination ratio (A/B) and the lamination ratio (C/B) in the unit, 1st to 528th layers are designed to be the same as in Example 1, and 529th to 601st layers are designed so that the lamination ratio (A/B) and the lamination ratio (C/B) in the unit are 0.7. Here, the 1st layer is the position of the layer when counted from the surface having the larger number of layers when the multilayer laminated film is divided into two so as to have the same thickness.

Feed block of Comparative Example 4: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° is 580 nm to 1650 nm according to formula (A), and to provide a lamination configuration of (layer A/layer B/layer C/layer B)n layer A (n is an integer representing the number of repeating units).

Feed block of Comparative Example 5: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° is 850 nm to 2300 nm according to formula (A), and to provide a lamination configuration of (layer A/layer B/layer C/layer B)n layer A (n is an integer).

Feed block of Example 11: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° was 850 nm to 1750 nm according to formula (A), and to provide a lamination configuration of (layer A/layer B/layer C/layer B)n layer A (n is an integer representing the number of repeating units), in which, as for the lamination ratio (A/B) and the lamination ratio (C/B) in the unit, 1st to 505th layers are designed to be the same as in Example 1, and 506th to 601st layers are designed so that the lamination ratio (A/B) and the lamination ratio (C/B) in the unit are 0.7. Here, the 1st layer is the position of the layer when counted from the surface having the larger number of layers when the multilayer laminated film is divided into two so as to have the same thickness.

Feed block of Example 12: a 601-layer feed block (laminating apparatus) (the number of repeating units is 150, the layer A is 151, the layer B is 300, and the layer C is 150) designed to continuously change the layer thicknesses of the layer A, the layer B, and the layer C from one surface layer toward the opposite surface layer so that the reflection wavelength at an incident angle of 10° was 850 nm to 1750 nm according to formula (A), and to provide a lamination configuration of (layer A/layer B/layer C/layer B)n layer A (n is an integer representing the number of repeating units), in which, as for the lamination ratio (A/B) and the lamination ratio (C/B) in the unit, 1st to 421st layers are designed to be the same as in Example 1, and 422nd to 601st layers are designed so that the lamination ratio (A/B) and the lamination ratio (C/B) in the unit are 0.7. Here, the 1st layer is the position of the layer when counted from the surface having the larger number of layers when the multilayer laminated film is divided into two so as to have the same thickness.

(Comparative Example 2)

Resin A was used as the thermoplastic resin constituting the layer A, and Resin J was used as the thermoplastic resin constituting the layer C. Resin A and Resin J were respectively melted at 280°C with extruders, and five FSS type leaf disc filters were interposed, then the resins were weighted so that the discharge ratio (lamination ratio) was layer A/layer C = 1.2 with a gear pump and simultaneously laminated with a 401-layer feed block (laminating apparatus) (the layer A is 201, and the layer C is 200) designed to continuously change the layer thicknesses of the layer A and the layer C from one surface layer toward the opposite surface layer so that the reflection wavelength at an incident angle of 10° was 850 nm to 1200 nm according to formula (A), and to provide a lamination configuration of (layer A/layer C)n layer A (n is an integer representing the number of repeating units). Then, the molten laminate was fed to a T-die and molded into a sheet form, and then, while an electrostatic voltage of 8 kV was applied with a wire, the molded laminate was quenched and solidified on a casting drum having a surface temperature maintained at 25°C, and an unstretched multilayer laminated film was thereby obtained. Except for the above, in the same manner as in Example 1, a multilayer laminated film having a thickness of 74 μm (thicknesses of both surface layers: 5 μm) was obtained. The evaluation results are shown in Table 2.

(Comparative Example 3)

Using a 801-layer feed block (laminating apparatus) (the layer A is 401, and the layer C is 400) designed to continuously change the layer thicknesses of the layer A and the layer C from one surface layer toward the opposite surface layer so that the reflection wavelength of a P wave at an incident angle of 60° is 400 nm to 800 nm according to formula (A), and to provide a lamination configuration of (layer A/layer C)n layer A (n is an integer representing the number of repeating units), a multilayer laminated film was obtained in the same manner as in Comparative Example 2, except that the resin of each layer, the number of layers, the thickness of the surface layers, the total thickness, the lamination ratio, and the film formation conditions were as shown in Table 1. The evaluation results are shown in Table 2.

(Verification of refractive index of layer B)

Examples 1 to 18, Comparative Example 1, and Comparative Examples 4 to 9 were implemented based on the verification of the refractive index of the layer B of the multilayer laminated film in the item (18), and the difference between the optical simulation result and the reflectance was ±3% or less in all Examples and Comparative Examples. Therefore, the refractive index of the layer B obtained in the item (17) was regarded as the refractive index of the layer B of the multilayer laminated film.

[Table 1-1]

| | Resin | | | Crystallinity of resin | | | Number of layers | Number of repeating units | Surface layer thickness | |
|---|---|---|---|---|---|---|---|---|---|---|
| | Layer A | Layer B | Layer C | Layer A | Layer B | Layer C | | | Surface on casting drum side | Opposite surface |
| | (-) | (-) | (-) | (-) | (-) | (-) | (-) | (-) | (μm) | (μm) |
| Example 1 | Resin A | Resin C | Resin H | Crystalline | Amorphous | Amorphous | 601 | 150 | 5 | 5 |
| Example 2 | Resin A | Resin C | Resin H | Crystalline | Amorphous | Amorphous | 401 | 100 | 3 | 3 |
| Example 3 | Resin A | Resin C | Resin H | crystalline | Amorphous | Amorphous | 201 | 50 | 1.5 | 1.5 |
| Example 4 | Resin A | Resin D | Resin I | Crystalline | Amorphous | Amorphous | 601 | 150 | 5 | 5 |
| Example 5 | Resin B | Resin C | Resin I | Crystalline | Amorphous | Amorphous | 601 | 150 | 5 | 5 |
| Example 6 | Resin B | Resin E | Resin J | Crystalline | Amorphous | Amorphous | 601 | 150 | 5 | 5 |
| Example 7 | Resin A | Resin F | Resin H | Crystalline | crystalline | Amorphous | 601 | 150 | 5 | 5 |
| Example 8 | Resin A | Resin C | Resin H | Crystalline | Amorphous | Amorphous | 601 | 150 | 5 | 5 |
| Example 9 | Resin A | Resin C | Resin H | Crystalline | Amorphous | Amorphous | 601 | 150 | 0.5 | 0.5 |
| Example 10 | Resin A | Resin C | Resin H | Crystalline | Amorphous | Amorphous | 601 | 150 | 5 | 5 |
| Example 11 | Resin A | Resin L | Resin H | Crystalline | Amorphous | Amorphous | 601 | 150 | 5 | 5 |
| Example 12 | Resin A | Resin C | Resin H | Crystalline | Amorphous | Amorphous | 601 | 150 | 5 | 5 |
| Example 13 | Resin A | Resin C | Resin H | Crystalline | Amorphous | Amorphous | 601 | 150 | 5 | 5 |
| Example 14 | Resin A | Resin C | Resin H | Crystalline | Amorphous | Amorphous | 601 | 150 | 6 | 6 |
| Example 15 | Resin A | Resin C | Resin H | Crystalline | Amorphous | Amorphous | 601 | 150 | 5 | 5 |
| Example 16 | Resin A | Resin D | Resin I | Crystalline | Amorphous | Amorphous | 601 | 150 | 5 | 5 |
| Example 17 | Resin B | Resin C | Resin I | Crystalline | Amorphous | Amorphous | 601 | 150 | 5 | 5 |
| Example 18 | Resin B | Resin E | Resin J | Crystalline | Amorphous | Amorphous | 601 | 150 | 5 | 5 |
| Comparative Example 1 | Resin A | Resin C | Resin H | Crystalline | Crystalline | Amorphous | 601 | 150 | 5 | 5 |
| Comparative Example 2 | Resin A | - | Resin J | Crystalline | - | Amorphous | 401 | - | 5 | 5 |
| Comparative Example 3 | Resin B | - | Resin K | Crystalline | - | Crystalline | 801 | - | 5 | 5 |
| Comparative Example 4 | Resin A | Resin C | Resin H | Crystalline | Amorphous | Amorphous | 601 | 150 | 5 | 5 |
| Comparative Example 5 | Resin A | Resin C | Resin H | Crystalline | Amorphous | Amorphous | 601 | 150 | 5 | 5 |

(continued)

| | Resin | | | Crystallinity of resin | | | Number of layers | Number of repeating units | Surface layer thickness | |
|---|---|---|---|---|---|---|---|---|---|---|
| | Layer A | Layer B | Layer C | Layer A | Layer B | Layer C | | | Surface on casting **drum** side | Opposite surface |
| | (-) | (-) | (-) | (-) | (-) | (-) | (-) | (-) | (μm) | (μm) |
| Comparative Example 6 | Resin A | Resin M | Resin H | Crystalline | Crystalline | Amorphous | 601 | 150 | 5 | 5 |
| Comparative Example 7 | Resin A | Resin C | Resin H | Crystalline | Amorphous | Amorphous | 601 | 150 | 4 | 4 |
| Comparative Example 8 | Resin A | Resin C | Resin H | Crystalline | Amorphous | Amorphous | 601 | 150 | 4 | 4 |
| Comparative Example 9 | Resin A | Resin C | Resin H | Crystalline | Amorphous | Amorphous | 601 | 150 | 5 | 5 |

[Table 1-2]

| | Total film thickness | Discharge ratio of entire film | | Class transition temperature of unstretched film | Machine direction | | Transverse direction | | Heat treatment | |
|---|---|---|---|---|---|---|---|---|---|---|
| | | A/B | C/B | | Temperature | Magnification | Temperature | Magnification | Temperature | Rx |
| | (μm) | (-) | (-) | (°C) | (°C) | (-) | (°C) | (-) | (°C) | (%) |
| Example 1 | 71 | 1.42 | 1.05 | 103 | 105 | 3.6 | 120 | 4.2 | 210 | 1 |
| Example 2 | 44 | 1.40 | 1.05 | 103 | 105 | 3.6 | 120 | 4.2 | 210 | 1 |
| Example 3 | 22 | 1.39 | 1.05 | 103 | 105 | 3.6 | 120 | 4.2 | 210 | 1 |
| Example 4 | 71 | 1.42 | 1.05 | 93 | 105 | 3.6 | 120 | 4.2 | 210 | 1 |
| Example 5 | 69 | 1.44 | 1.05 | 95 | 95 | 3.5 | 110 | 4.0 | 210 | 1 |
| Example 6 | 69 | 1.44 | 1.05 | 80 | 95 | 3.5 | 110 | 4.0 | 210 | 1 |
| Example 7 | 71 | 1.42 | 1.05 | 103 | 105 | 3.6 | 120 | 4.2 | 210 | 1 |
| Example 8 | 63 | 1.49 | 1.05 | 103 | 105 | 3.6 | 120 | 4.2 | 210 | 1 |
| Example 9 | 62 | 1.00 | 1.05 | 103 | 105 | 3.6 | 120 | 4.2 | 210 | 1 |
| Example 10 | 71 | 1.42 | 1.05 | 103 | 105 | 3.3 | 120 | 4.2 | 210 | 1 |
| Example 11 | 71 | 1.30 | 1.00 | 105 | 105 | 3.6 | 120 | 4.2 | 210 | 1 |
| Example 12 | 72 | 1.29 | 1.10 | 103 | 105 | 3.6 | 120 | 4.2 | 210 | 1 |
| Example 13 | 71 | 1.36 | 1.23 | 103 | 105 | 3.6 | 120 | 4.2 | 210 | 1 |
| Example 14 | 71 | 1.68 | 1.05 | 103 | 105 | 3.6 | 120 | 4.2 | 210 | 1 |
| Example 15 | 71 | 1.68 | 1.22 | 103 | 105 | 3.6 | 120 | 4.2 | 210 | 1 |
| Example 16 | 71 | 1.36 | 1.23 | 93 | 105 | 3.6 | 120 | 4.2 | 210 | 1 |
| Example 17 | 69 | 1.36 | 1.23 | 95 | 95 | 3.5 | 110 | 4.0 | 210 | 1 |
| Example 18 | 69 | 1.36 | 1.23 | 80 | 95 | 3.5 | 110 | 4.0 | 210 | 1 |
| Comparative Example 1 | 71 | 1.42 | 1.10 | 103 | 105 | 3.6 | 120 | 4.2 | 210 | 1 |
| Comparative Example 2 | 74 | 1.20 | - | 93 | 105 | 3.6 | 120 | 4.2 | 210 | 1 |
| Comparative Example 3 | 110 | 1.50 | - | 85 | 90 | 3.3 | 100 | 3.6 | 210 | 1 |
| Comparative Example 4 | 59 | 1.40 | 1.10 | 103 | 105 | 3.6 | 120 | 4.2 | 210 | 1 |

| | Total film thickness | Discharge ratio of entire film | | Class transition temperature of unstretched film | Machine direction | | Transverse direction | | Heat treatment | |
|---|---|---|---|---|---|---|---|---|---|---|
| | | A/B | C/B | | Temperature | Magnification | Temperature | Magnification | Temperature | Rx |
| | (μm) | (-) | (-) | (°C) | (°C) | (-) | (°C) | (-) | (°C) | (%) |
| Comparative Example 5 | 83 | 1.43 | 1.10 | 103 | 105 | 3.6 | 120 | 4.2 | 210 | 1 |
| Comparative Example 6 | 71 | 1.42 | 1.10 | 103 | 105 | 3.6 | 120 | 4.2 | 210 | 1 |
| Comparative Example 7 | 71 | 1.08 | 1.43 | 103 | 105 | 3.6 | 120 | 4.2 | 210 | 1 |
| Comparative Example 8 | 71 | 1.08 | 1.25 | 103 | 105 | 3.6 | 120 | 4.2 | 210 | 1 |
| Comparative Example 9 | 71 | 1.42 | 1.43 | 103 | 105 | 3.6 | 120 | 4.2 | 210 | 1 |

[Table 1-3]

| | Cooling | in-plane refractive index of outermost layer (layer A) | | Out-of-plane refractive index of outermost layer (layer A) (Average value) | Refractive index of layer B | | Refractive index of layer C | |
|---|---|---|---|---|---|---|---|---|
| | Temperature | Main orientation axis direction | Direction perpendicular to main orientation axis direction | | In-plane refractive index (Average value) | Out-of-plane refractive index (Average value) | In-plane refractive index (Average value) | out-of-plane refractive index (Average value) |
| | (°C) | (-) | (-) | (-) | (-) | (-) | (-) | (-) |
| Example 1 | 100 | 1.73 | 1.73 | 1.50 | 1. 61 | 1. 61 | 1. 49 | 1.49 |
| Example 2 | 100 | 1.73 | 1.73 | 1.50 | 1.61 | 1.61 | 1. 49 | 1.49 |
| Example 3 | 100 | 1.73 | 1.73 | 1.50 | 1.61 | 1.61 | 1. 49 | 1.49 |
| Example 4 | 100 | 1.73 | 1.73 | 1.50 | 1. 64 | 1. 64 | 1.55 | 1.55 |
| Example 5 | 100 | 1.66 | 1.66 | 1.49 | 1.61 | 1.61 | 1.55 | 1.55 |
| Example 6 | 100 | 1.66 | 1.66 | 1.49 | 1. 62 | 1.62 | 1.57 | 1.57 |
| Example 7 | 100 | 1.73 | 1.73 | 1.50 | 1. 60 | 1.56 | 1. 49 | 1.49 |
| Example 8 | 100 | 1.73 | 1.73 | 1.50 | 1.61 | 1. 61 | 1. 49 | 1.49 |
| Example 9 | 100 | 1.73 | 1.73 | 1.50 | 1.61 | 1.61 | 1. 49 | 1.49 |
| Example 10 | 100 | 1.76 | 1.70 | 1.50 | 1. 61 | 1. 61 | 1. 49 | 1.49 |
| Example 11 | 100 | 1.73 | 1.73 | 1.50 | 1.63 | 1.63 | 1. 49 | 1.49 |
| Example 12 | 100 | 1.73 | 1.73 | 1.50 | 1. 61 | 1.61 | 1.49 | 1.49 |
| Example 13 | 100 | 1.73 | 1.73 | 1.50 | 1.61 | 1.61 | 1. 49 | 1.49 |
| Example 14 | 100 | 1.73 | 1.73 | 1.50 | 1.61 | 1.61 | 1. 49 | 1.49 |
| Example 15 | 100 | 1.73 | 1.73 | 1.50 | 1. 61 | 1. 61 | 1. 49 | 1.49 |
| Example 16 | 100 | 1.73 | 1.73 | 1.50 | 1.64 | 1.64 | 1.55 | 1.55 |
| Example 17 | 100 | 1.66 | 1.66 | 1.49 | 1.61 | 1. 61 | 1.55 | 1.55 |
| Example 18 | 100 | 1.66 | 1.66 | 1.49 | 1.62 | 1.62 | 1.57 | 1.57 |
| Comparative Example 1 | 100 | 1.73 | 1.73 | 1.50 | 1.61 | 1.52 | 1. 49 | 1.49 |
| Comparative Example 2 | 100 | 1.73 | 1.73 | 1.50 | - | - | 1.57 | 1.57 |

| | Cooling | in-plane refractive index of outermost layer (layer A) | | Out-of-plane refractive index of outermost layer (layer A) (Average value) | Refractive index of layer B | | Refractive index of layer C | |
|---|---|---|---|---|---|---|---|---|
| | Temperature | Main orientation axis direction | Direction perpendicular to main orientation axis direction | | In-plane refractive index (Average value) | Out-of-plane refractive index (Average value) | In-plane refractive index (Average value) | out-of-plane refractive index (Average value) |
| | (°C) | (-) | (-) | (-) | (-) | (-) | (-) | (-) |
| Comparative Example 3 | 100 | 1.65 | 1.65 | 1.49 | - | - | 1.63 | 1.63 |
| Comparative Example 4 | 100 | 1.73 | 1.73 | 1.50 | 1. 61 | 1. 61 | 1. 49 | 1.49 |
| Comparative Example 5 | 100 | 1.73 | 1.73 | 1.50 | 1.61 | 1.61 | 1. 49 | 1.49 |
| Comparative Example 6 | 100 | 1.73 | 1.73 | 1.50 | 1.62 | 1.54 | 1. 49 | 1.49 |
| Comparative Example 7 | 100 | 1.73 | 1.73 | 1.50 | 1.61 | 1.61 | 1. 49 | 1.49 |
| Comparative Example 8 | 100 | 1.73 | 1.73 | 1.50 | 1.61 | 1.61 | 1. 49 | 1.49 |
| Comparative Example 9 | 100 | 1.73 | 1.73 | 1.50 | 1. 61 | 1. 61 | 1. 49 | 1.49 |

Since only the layer A and the layer C are present in the multilayer laminated films of Comparative Examples 2 and 3, the value of A/C was described in the column of A/B for the lamination ratio.

[Table 2-1]

| | In descending order of dielectric constants of layers A, B, and C | Proportion of units having total layer thickness of 250 nm to 630 nm or less in repeating unit | Proportion of repeating units having lamination ratio in range of 0.8 or more and 1.3 or less | | Ratio of total thickness of layers having layer thickness of 1000 nm or less | | Average reflectance of visible P-wave light incident at angle of 60° to normal line of film surface | Plane orientation coefficient of layer A |
| --- | --- | --- | --- | --- | --- | --- | --- | --- |
| | | | Lamination ratio (A/B) | Lamination ratio (C/B) | T = DA/DB | S = DC/DB | | |
| | (-) | (-) | (-) | (%) | (-) | (-) | (%) | (-) |
| Example 1 | A > B > C | 99 | 99 | 100 | 0.92 | 1.05 | 33 | 0.23 |
| Example 2 | A > B > C | 99 | 99 | 100 | 0.91 | 1.04 | 24 | 0.23 |
| Example 3 | A > B > C | 98 | 99 | 100 | 0.93 | 1.05 | 14 | 0.23 |
| Example 4 | A > B > C | 99 | 99 | 100 | 0.91 | 1.05 | 31 | 0.23 |
| Example 5 | A > B > C | 99 | 99 | 100 | 0.92 | 1. 04 | 21 | 0.17 |
| Example 6 | A > B > C | 99 | 99 | 100 | 0.92 | 1.05 | 16 | 0.17 |
| Example 7 | A > B > C | 99 | 99 | 100 | 0.93 | 1.04 | 20 | 0.23 |
| Example 8 | A > B > C | 99 | 99 | 100 | 0.91 | 1.04 | 30 | 0.23 |
| Example 9 | A > B > C | 99 | 99 | 100 | 0.88 | 1.02 | 29 | 0.23 |
| Example 10 | A > B > C | 99 | 99 | 100 | 0.92 | 1.05 | 42 | 0.23 |
| Example 11 | A > B > C | 99 | 84 | 84 | 0.84 | 0.99 | 22 | 0.23 |
| Example 12 | A > B > C | 99 | 72 | 73 | 0.78 | 1.04 | 43 | 0.23 |
| Example 13 | A > B > C | 99 | 99 | 100 | 0.91 | 1.21 | 41 | 0.23 |
| Example 14 | A > B > C | 99 | 99 | 100 | 1.11 | 1.02 | 17 | 0.23 |
| Example 15 | A > B > C | 99 | 99 | 100 | 1.10 | 1.19 | 21 | 0.23 |
| Example 16 | A > B > C | 99 | 99 | 100 | 0.90 | 1.19 | 38 | 0.23 |
| Example 17 | A > B > C | 99 | 99 | 100 | 0.89 | 1.21 | 27 | 0.17 |
| Example 18 | A > B > C | 99 | 99 | 100 | 0.89 | 1.20 | 22 | 0.17 |
| Comparative Example 1 | A > B > C | 99 | 99 | 100 | 0.93 | 1.05 | 5 | 0.23 |
| Comparative Example 2 | - | - | - | - | - | - | 1 | 0.23 |
| Comparative Example 3 | - | - | - | - | - | - | 44 | 0.16 |
| Comparative Example 4 | A > B > C | 73 | 99 | 100 | 0.91 | 1. 03 | 68 | 0.23 |
| Comparative Example 5 | A > B > C | 74 | 99 | 100 | 0.92 | 1.04 | 27 | 0.23 |
| Comparative Example 6 | A > B > C | 99 | 99 | 100 | 0.91 | 1.05 | 6 | 0.23 |
| Comparative Example 7 | A > B > C | 99 | 0 | 0 | 0.71 | 1.40 | 58 | 0.23 |

(continued)

| | In descending order of dielectric constants of layers A, B, and C | Proportion of units having total layer thickness of 250 nm to 630 nm or less in repeating unit | Proportion of repeating units having lamination ratio in range of 0.8 or more and 1.3 or less | | Ratio of total thickness of layers having layer thickness of 1000 nm or less | | Average reflectance of visible P-wave light incident at angle of 60° to normal line of film surface | Plane orientation coefficient of layer A |
|---|---|---|---|---|---|---|---|---|
| | | | Lamination ratio (A/B) | Lamination ratio (C/B) | T = DA/DB | S = DC/DB | | |
| | (-) | (-) | (-) | (%) | (-) | (-) | (%) | (-) |
| Comparative Example 8 | A > B > C | 99 | 0 | 100 | 0.70 | 1.22 | 52 | 0.23 |
| Comparative Example 9 | A > B > C | 99 | 99 | 0 | 0.90 | 1.41 | 49 | 0.23 |

[Table 2-2]

| | Ratio of dielectric constant in in-plane direction to dielectric constant in out-of-plane direction of layer B | Saturation of perpendicularly incident transmitted light | Transmittance of perpendicularly incident visible light | Near-infrared reflectance | | Solar radiation heat acquisition rate Tts | Relationship of Rp20 ≤ Rp40 < Rp60 | saturation of reflected light of P wave | Rp60 azimuth angle variation |
|---|---|---|---|---|---|---|---|---|---|
| | | | | Wavelength range in which reflectance is 40% or more | Average reflectance in wavelength range | | | | |
| | (%) | (-) | (%) | (nm) | (%) | (%) | (-) | (%) | (%) |
| Example 1 | 0.8 | 2 | 91 | 852 to 1748 | 93 | 61 | Satisfied | 4 | 1 |
| Example 2 | 0.8 | 2 | 91 | 844 to 1711 | 85 | 63 | Satisfied | 4 | 1 |
| Example 3 | 0.8 | 1 | 92 | 872 to 1650 | 67 | 69 | Not satisfied | 3 | 1 |
| Example 4 | 0.7 | 1 | 92 | 870 to 1723 | 82 | 66 | Satisfied | 4 | 1 |
| Example 5 | 0.8 | 1 | 92 | 855 to 1631 | 53 | 73 | Not satisfied | 3 | 1 |
| Example 6 | 0.8 | 1 | 92 | 880 to 1620 | 43 | 77 | Not satisfied | 3 | 1 |
| Example 7 | 5.4 | 2 | 91 | 855 to 1744 | 92 | 60 | Satisfied | 4 | 1 |
| Example 8 | 0.8 | 2 | 91 | 842 to 1410 | 93 | 63 | Satisfied | 35 | 1 |
| Example 9 | 0.8 | 5 | 86 | 855 to 1744 | 91 | 61 | Satisfied | 25 | 3 |
| Example 10 | 0.8 | 3 | 89 | 845 to 1752 | 91 | 60 | Satisfied | 4 | 21 |
| Example 11 | 0.9 | 8 | 78 | 853 to 1742 | 91 | 58 | Satisfied | 12 | 2 |
| Example 12 | 0.8 | 13 | 79 | 856 to 1738 | 91 | 59 | Satisfied | 23 | 3 |
| Example 13 | 0.8 | 2 | 90 | 853 to 1751 | 93 | 60 | Satisfied | 4 | 1 |
| Example 14 | 0.8 | 2 | 87 | 851 to 1749 | 92 | 60 | Not satisfied | 7 | 1 |
| Example 15 | 0.8 | 3 | 89 | 851 to 1762 | 92 | 60 | Not satisfied | 5 | 1 |
| Example 16 | 0.8 | 2 | 91 | 868 to 1719 | 82 | 65 | Satisfied | 4 | 1 |
| Example 17 | 0.8 | 2 | 91 | 852 to 1633 | 53 | 72 | Satisfied | 3 | 1 |
| Example 18 | 0.8 | 2 | 91 | 877 to 1622 | 43 | 76 | Satisfied | 3 | 1 |

(continued)

| | Ratio of dielectric constant in in-plane direction to dielectric constant in out-of-plane direction of layer B | Saturation of perpendicularly incident transmitted light | Transmittance of perpendicularly incident visible light | Near-infrared reflectance | | Solar radiation heat acquisition rate Tts | Relationship of Rp20 ≤ Rp40 < Rp60 | saturation of reflected light of P wave | Rp60 azimuth angle variation |
| | | | | Wavelength range in which reflectance is 40% or more | Average reflectance in wavelength range | | | | |
| | (%) | (-) | (%) | (nm) | (%) | (%) | (-) | (%) | (%) |
| Comparative Example 1 | 12.6 | 2 | 91 | 853 to 1744 | 93 | 61 | Not satisfied | 3 | 1 |
| Comparative Example 2 | - | 2 | 91 | 844 to 1215 | 94 | 69 | Not satisfied | 3 | - |
| Comparative Example 3 | - | - | 91 | Absent | - | 87 | Satisfied | 3 | 3 |
| Comparative Example 4 | 0.8 | 32 | 62 | 578 to 1670 | 84 | 37 | Satisfied | 55 | 6 |
| Comparative Example 5 | 0.8 | 22 | 68 | 871 to 2306 | 81 | 57 | Satisfied | 26 | 4 |
| Comparative Example 6 | 11.3 | 3 | 90 | 853 to 1741 | 92 | 60 | Not satisfied | 3 | 1 |
| Comparative Example 7 | 0. B | 7 | 62 | 854 to 1778 | 91 | 52 | Satisfied | 6 | 3 |
| Comparative Example 8 | 0. B | 11 | 68 | 852 to 1781 | 90 | 57 | Satisfied | 11 | 3 |
| Comparative Example 9 | 0.8 | B | 67 | 852 to 1765 | 90 | 57 | Satisfied | 12 | 3 |

(Examples 19 to 39 and Comparative Examples 9 to 20)

Examples 19 to 39 and Comparative Examples 9 to 20 are Examples and Comparative Examples of the projected image display member including the multilayer laminated film. Regarding the manufacture of the laminate body, a laminate body of the multilayer laminated film of Comparative Example 2 and the multilayer laminated film of Comparative Example 3 was manufactured. Films each having an A4 size are laminated using an acrylic optical adhesive sheet having an adhesive layer thickness of 25 μm. For the lamination, a roll laminator (MRK-600) manufactured by MCK CO.,LTD was used. Next, regarding the manufacture of the projected image display members 1 to 18, 21 to 27, and 29 to 31, a projected image display member having a configuration of float glass plate/acrylic adhesive layer having a thickness of 25 μm/film was prepared by laminating, using an acrylic optical adhesive sheet having an adhesive layer thickness of 25 μm, each of a float glass plate having a thickness of 2 mm and an A4 size, films of Examples 1 to 12 and Comparative Examples 1 to 6 and laminate bodies having an A4 size, to sequentially prepare the projected image display members 1 to 18, 21 to 27, 29, and 30. For the lamination, a roll laminator (MRK-600) manufactured by MCK CO.,LTD was used. In the projected image display member 18 prepared using the laminate body, wrinkles and distortion on concavities and convexities having a cycle of 3 to 4 mm were generated. On the other hand, no wrinkle and distortion was visually recognized in the projected image display members 1 to 17, 21 to 27, 29, and 31.

(Manufacture of projected image display member 19)

Using a float glass plate having a thickness of 2 mm and an A4 size, PVB (polyvinyl butyral) having a thickness of 0.76 mm, and the multilayer laminated film of Example 1, laminated glass having the following configuration was prepared. Laminated glass configuration: float plate glass/PVB/multilayer laminated film of Example 1/PVB/float plate glass. In preparation of laminated glass, Nisshinbo LAMINATOR0303S was used as a laminate apparatus. The laminates stacked so as to have a laminated glass configuration were placed in a laminate apparatus, a vacuum was drawn at a temperature of 100°C for 5 minutes, a vacuum was further drawn at a temperature of 130°C for 5 minutes, and then pressure bonding was performed at a pressure of 0.1 MPa for 60 minutes.

(Manufacture of projected image display member 28)

A projected image display member was manufactured in the same manner as in the projected image display member 19 except that the multilayer laminated film of Example 13 was used instead of the multilayer laminated film of Example 1.

(Manufacture of projected image display member 20)

Laminated glass having the following configuration was prepared in the same manner as the projected image display member 19. Laminated glass configuration: float plate glass/PVB/laminate body/PVB/float plate glass. In the projected image display member 19, slight distortion on concavities and convexities was generated, but wrinkles were not visually recognized. On the other hand, in the projected image display member 20, large wrinkles and distortion of a concavo-convex shape having a cycle of 1 to 2 mm were generated.

The projected image display devices of Examples 19 to 39 and Comparative Examples 9 to 20 were evaluated using the projected image display members 1 to 30 as shown in Table 3. Table 3 shows combinations of the projected image display members and the intensities of the P waves used, and evaluation results of the projected image display devices.

[Table 3]

| | Projected image display member | Film used | Solar radiation heat eccquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Example 19 | Projected image display member 1 | Example 1 | 59 | 100 | A | A | A | A | A |
| Example 20 | Projected image display member 2 | Example 2 | 61 | 100 | B | A | A | A | A |
| Example 21 | Projected image display member 3 | Example 3 | 67 | 100 | B | A | A | A | A |
| Example 22 | Projected image display member 4 | Example 4 | 64 | 100 | A | A | A | A | A |
| Example 23 | Projected image display member 5 | Example 5 | 71 | 100 | B | A | A | A | A |
| Example 24 | Projected image display member 6 | Example 6 | 75 | 100 | B | A | A | A | A |

| | Projected image display member | Film used | Solar radiation heat eccquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Example 25 | Projected image display member 7 | Example 7 | 58 | 100 | B | A | A | A | A |
| Example 26 | Projected image display member 8 | Example 8 | 61 | 100 | A | A | A | C | A |
| Example 27 | Projected image display member 9 | Example 9 | 59 | 100 | A | A | A | C | A |
| Example 28 | Projected image display member 10 | Example 10 | 58 | 100 | A | A | A | A | A |
| Example 29 | Projected image display member 1 | Example 1 | 59 | 75 | B | B | A | A | A |
| Example 30 | Projected image display member 19 | Example 1 | 57 | 100 | A | A | A | A | A |

(continued)

| | Projected image display member | Film used | Solar radiation heat ecquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Example 31 | Projected image display member 11 | Example 11 | 60 | 100 | B | A | A | B | B |
| Example 32 | Projected image display member 17 | Example 12 | 57 | 100 | A | A | A | C | C |
| Example 33 | Projected image display member 22 | Example 13 | 50 | 100 | A | A | A | A | A |
| Example 34 | Projected image display member 23 | Example 14 | 58 | 100 | B | A | A | B | A |
| Example 35 | Projected image display member 24 | Exanple 15 | 58 | 100 | B | A | A | A | A |
| Example 36 | Projected image display member 25 | Example 16 | 63 | 100 | A | A | A | A | A |

(continued)

| | Projected image display member | Film used | Solar radiation heat ecquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Example 37 | Projected image dis-play mem-ber 26 | Example 17 | 70 | 100 | A | A | A | A | A |
| Example 38 | Projected image dis-play mem-ber 27 | Example 18 | 74 | 100 | B | A | A | A | A |
| Example 39 | Projected image dis-play mem-ber 28 | Example 19 | 56 | 100 | A | A | A | A | A |
| Comparative Example 9 | Projected image dis-play mem-ber 12 | Comparative Example 1 | 59 | 100 | C | D | D | D | A |
| Comparative Example 10 | Projected image dis-play mem-ber 13 | Comparative Example 2 | 67 | 100 | C | D | D | D | A |
| Comparative Example 11 | Projected image dis-play mem-ber 14 | Comparative Example 3 | 85 | 100 | A | A | A | A | A |

| | Projected image display member | Film used | Solar radiation heat ecquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Comparative Example 12 | Projected image display member 15 | Comparative Example 4 | 35 | 100 | A | A | A | C | D |
| Comparative Example 13 | Projected image display member 16 | Comparative Example 5 | 55 | 100 | B | A | A | C | D |
| Comparative Example 14 | Projected image display member 21 | Comparative Example 6 | 58 | 100 | C | D | D | D | A |
| Comparative Example 15 | Projected image display member 25 | Comparative Example 7 | 51 | 100 | A | A | A | B | D |
| Comparative Example 16 | Projected image display member 30 | Comparative Example 8 | 55 | 100 | A | A | A | B | D |
| Comparative Example 17 | Projected image display member 31 | Comparative Example 9 | 55 | 100 | A | A | A | B | D |

EP 4 776 036 A1

| | Projected image display member | Film used | Solar radiation heat ecquisition rate Tts (%) of projected image display member | Intensity (%) of P wave of projected moving image incident on projected image display member | Evaluation results of projected image display device | | | | |
|---|---|---|---|---|---|---|---|---|---|
| | | | | | Display property of projected moving image at incident angle of 60° | Double image visibility of projected moving image at incident angle of 60° | visibility of lattice image in projected moving image | Visibility of color of projected moving image | visibility of background |
| Comparative Example 18 | Projected image display member 18 | Laminate body | 66 | 100 | A | A | B | A | A |
| Comparative Example 19 | Projected image display member 1 | Example 1 | 59 | 0 | B | C | A | A | A |
| Comparative Example 20 | Projected image display member 20 | Laminate body | 64 | 100 | A | A | C | A | B |

EP 4 776 036 A1

INDUSTRIAL APPLICABILITY

The present invention is a multilayer laminated film having both a near-infrared ray reflecting function and a function of reflecting visible P-wave light in an oblique direction while being transparent to transmit visible light in a front direction. Furthermore, the multilayer laminated film of the present invention can be suitably used for a projected image display member, a projected image display device using the projected image display member, a transportation system or a building using the projected image display device, and the like.

DESCRIPTION OF REFERENCE SIGNS

1: Multilayer laminated film reflecting near infrared ray
2: Multilayer laminated film reflecting visible P-wave light
3: Laminate film
4: Multilayer laminated film
5: One of two different thermoplastic resin layers of near-infrared ray reflecting multilayer laminated film
6: The other one of two different thermoplastic resin layers of near-infrared ray reflecting multilayer laminated film
7: One of two different thermoplastic resin layers of visible P-wave light reflecting multilayer laminated film
8: The other one of two different thermoplastic resin layers of visible P-wave light reflecting multilayer laminated film
9: Layer A
10: Layer B
11: Layer C
12: Transparent adhesive
13: Visible light incident in front direction
14: Near infrared ray
15: P-wave in oblique direction
16: Laminated glass (configuration having multilayer laminated film between glasses)
17: Laminated glass (configuration having multilayer laminated film on surface)
18: Transparent support (glass)
19: Adhesive layer
20: Reflectance of P wave
21: Reflectance of S wave
22: Refractive index ($Na\theta$) at incident angle $\theta$ of layer A
23: Refractive index ($Nc\theta$) at incident angle $\theta$ of layer C
24: Refractive index ($Nb\theta$) at incident angle $\theta$ of layer B in multilayer laminated film (Example 1)
25: Refractive index ($Nb\theta$) at incident angle $\theta$ of layer B in near-infrared ray reflecting multilayer laminated film (Comparative Example 1)
26: Average reflectance of visible P-wave light of multilayer laminated film (Example 1)
27: Average reflectance of visible P-wave light of near-infrared ray reflecting multilayer laminated film (Comparative Example 1)
28: Thickness of layer A
29: Thickness of layer C
30: Thickness of layer B
31: Antireflection layer
32: Functional layer
33: Projected image display member
34: Background
35: Eyes of user of projected image display device
36: Incident angle of projected image
37: Moving image projection device
38: Projected image
39: Conventional projected image display member
40: Light guiding member
41: Reflecting member

**Claims**

1. A multilayer laminated film comprising ordered arrays of three or more types of resin layers, wherein, when a dielectric constant of each of the resin layers at a loss energy of 2.5 eV measured by electron energy loss spectroscopy (EELS measurement) is a dielectric constant $X_i$ (i = 1, 2, 3 ...), and the resin layers are defined as a layer A, a layer B, and a layer C in a descending order having the larger dielectric constant $X_i$, all of the following (1) to (3) are satisfied:

   (1) the multilayer laminated film has a repeating unit structure in which repeating units are laminated, the repeating units each having layers arrayed in an order of layer A/layer B/layer C/layer B;
   (2) repeating units having a total layer thickness in each repeating unit in a range of 250 nm or more and 630 nm or less are 80% or more and 100% or less of all the repeating units; and
   (3) the multilayer laminated film is constituted by a combination of the layer A that is a crystalline thermoplastic resin layer and the layer B and the layer C that are amorphous thermoplastic resin layers.

2. The multilayer laminated film according to claim 1, wherein, in each of the repeating units, the repeating units in which each of a lamination ratio (A/B) of the layer A to a total thickness of the layer B and a lamination ratio (C/B) of the layer C to the total thickness of the layer B is in a range of 0.8 or more and 1.3 or less are 80% or more and 100% or less of all the repeating units.

3. A multilayer laminated film comprising a repeating unit structure in which repeating units are laminated, the repeating units each having three types of resin layers (layer A, layer B, layer C) having different dielectric constants $X_i$ at a loss energy of 2.5 eV measured by electron energy loss spectroscopy (EELS measurement) arrayed in an order of layer A/layer B/layer C/layer B, wherein

   units having a total layer thickness in the repeating unit in a range of 250 nm or more and 630 nm or less are 80% or more and 100% or less of all the repeating units,
   in the repeating units, repeating units in which each of a lamination ratio (A/B) of the layer A to a total thickness of the layer B and a lamination ratio (C/B) of the layer C to the total thickness of the layer B is in a range of 0.8 or more and 1.3 or less are 80% or more and 100% or less of all the repeating units,
   in the dielectric constant $X_i$, when a dielectric constant of the layer A is $X_A$, a dielectric constant of the layer B is $X_B$, and a dielectric constant of the layer C is $X_C$, $X_A > X_B > X_C$ is satisfied, and
   an average reflectance of visible P-wave light incident at an angle of 60° to a normal line of a film surface is 10% or more and 99% or less.

4. The multilayer laminated film according to any one of claims 1 to 3, wherein the number of units having a total layer thickness in the repeating unit in a range of 250 nm or more and 630 nm or less is 15 or more and 2500 or less.

5. The multilayer laminated film according to claim 3 or 4, wherein the multilayer laminated film is constituted by a combination of the layer A that is a crystalline thermoplastic resin layer and the layer B and the layer C that are amorphous thermoplastic resin layers.

6. The multilayer laminated film according to any one of claims 1 to 5, wherein the layer A has a plane orientation coefficient of 0.06 or more, and, in the dielectric constant $X_B$ of the layer B, a ratio obtained by dividing a difference between a dielectric constant in an in-plane direction and a dielectric constant in an out-of-plane direction by the dielectric constant in the out-of-plane direction is 10% or less.

7. The multilayer laminated film according to any one of claims 1 to 6, wherein saturation of transmitted light perpendicularly incident on a film surface is 10 or less.

8. The multilayer laminated film according to any one of claims 1 to 7, wherein transmittance of visible light perpendicularly incident on a film surface is 70% or more and 100% or less.

9. The multilayer laminated film according to any one of claims 1 to 8, wherein, in a wavelength range of 850 nm to 1600 nm when light is incident on a film surface so that an angle formed with a normal line of the film surface is 10°, a reflectance is 40% or more over at least a wavelength of 100 nm.

10. The multilayer laminated film according to any one of claims 1 to 9, wherein, when average reflectances of P waves in a visible-light band incident on a film surface at angles of 20°, 40°, and 60° to a normal line of the film surface are Rp20 (%), Rp40 (%), and Rp60 (%), respectively, a relationship of Rp20 ≤ Rp40 < Rp60 is satisfied.

11. The multilayer laminated film according to any one of claims 1 to 10, wherein saturation of reflected light of a P wave incident at an angle of 60° to a normal line of a film surface is 20 or less.

12. The multilayer laminated film according to any one of claims 1 to 11, wherein, when an average reflectance of P waves in a visible-light band incident on a film surface at an angle of 60° to a normal line of the film surface is Rp60 (%), azimuth angle variation of Rp60 is 10% or less.

13. The multilayer laminated film according to claims 1 to 12, wherein, in all layers having a layer thickness in the multilayer laminated film of 1000 nm or less, a ratio: T (T = DA/DB) of a total layer thickness (DA) of the layer A to a total thickness (DB) of the layer B satisfies 0.80 ≤ T ≤ 1.00, and a ratio: S (S = DC/DB) of a total thickness (DC) of the layer C to the total thickness of the layer B satisfies 1.10 ≤ S ≤ 1.30.

14. A projected image display member, wherein the multilayer laminated film according to any one of claims 1 to 13 is located on at least one surface of a transparent support or between transparent members.

15. The projected image display member according to claim 14, wherein the projected image display member has a thickness of 0.5 mm or more and 7 mm or less, and the transparent support includes at least any one of glass, polycarbonate resin, and acrylic resin.

16. A projected image display device comprising: the projected image display member according to claim 14 or 15; and a light source that irradiates a display surface of the projected image display member with light.

17. The projected image display device according to claim 15, wherein intensity of a P wave in intensity of a moving image incident on the display surface of the projected image display member (intensity of P wave/(intensity of P wave + intensity of S wave)) is 51% or more.

18. The projected image display device according to claim 16 or 17, which is used by being worn on a user's head.

19. A transportation system comprising the projected image display device according to claim 16 or 17, wherein at least a part of light emitted from the light source toward the projected image display member is incident on the projected image display member at an angle of 50° to 75° to a normal line of the projected image display member.

20. The transportation system according to claim 19, comprising a projected image display device in which a radius of curvature of a center of the projected image display member in a horizontal direction is 1 m or more and 8 m or less.

21. A building comprising the projected image display device according to claim 16 or 17.

【FIG.1】

(a)

(b)

(c)

(d)

【FIG. 2】

(a)

(b)

【FIG. 3】

(a)

(b)

(c)

(d)

【FIG. 4】

【FIG. 5】

【FIG. 6】

【 FIG. 7 】

【 FIG. 8 】

(a)

(b)

(c)

【 FIG. 9 】

(a)

(b)

(c)

【FIG. 10】

【FIG. 11】

(a)

39 Swave
39 Pwave

(b)

33 Swave
33 Pwave

【FIG. 12】

【FIG. 13】

# EP 4 776 036 A1

## INTERNATIONAL SEARCH REPORT

| | |
|---|---|
| | International application No. |
| | **PCT/JP2024/031553** |

### A. CLASSIFICATION OF SUBJECT MATTER

*G02B 5/28*(2006.01)i; *B32B 7/025*(2019.01)i; *G02B 5/26*(2006.01)i; *G02B 27/01*(2006.01)i; *G02B 27/02*(2006.01)i; *G09F 9/00*(2006.01)i

FI:  G02B5/28; B32B7/025; G02B5/26; G02B27/01; G02B27/02 Z; G09F9/00 313

According to International Patent Classification (IPC) or to both national classification and IPC

### B. FIELDS SEARCHED

Minimum documentation searched (classification system followed by classification symbols)

G02B5/28; B32B7/025; G02B5/26; G02B27/01; G02B27/02; G09F9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-509281 A (MINNESOTA MINING & MANUFACTURING CO.) 26 March 2002 (2002-03-26) claims, paragraphs [0003], [0006], [0010], [0016]-[0032], [0044]-[0045], [0050]-[0051], [0060], [0072], fig. 1 | 1-12, 14-21 |
| A | | 13 |
| Y | JP 2020-170159 A (TORAY INDUSTRIES, INC.) 15 October 2020 (2020-10-15) claims, paragraphs [0028], [0036]-[0037], [0039]-[0040], [0057], fig. 5, 8-10 | 1-12, 14-21 |
| A | | 13 |
| A | WO 2005/040868 A1 (TEIJIN DUPONT FILMS JAPAN LTD.) 06 May 2005 (2005-05-06) entire text, all drawings | 1-21 |
| A | WO 2022/195372 A1 (3M INNOVATIVE PROPERTIES COMPANY) 22 September 2022 (2022-09-22) entire text, all drawings | 1-21 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/031553** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/198635 A1 (TORAY INDUSTRIES, INC.) 17 October 2019 (2019-10-17)<br>entire text | 1-21 |
| P, A | JP 2023-133241 A (TORAY INDUSTRIES, INC.) 22 September 2023 (2023-09-22)<br>entire text, all drawings | 1-21 |

Form PCT/ISA/210 (second sheet) (July 2022)

## INTERNATIONAL SEARCH REPORT
### Information on patent family members

International application No.

**PCT/JP2024/031553**

| Patent document cited in search report | | | Publication date (day/month/year) | Patent family member(s) | | | Publication date (day/month/year) |
|---|---|---|---|---|---|---|---|
| JP | 2002-509281 | A | 26 March 2002 | US | 2001/0009714 | A1 | |
| | | | | claims, paragraphs [0004], [0007], [0011], [0040]-[0056], [0067]-[0068], [0072]-[0073], [0082], [0094], fig. 1 | | | |
| | | | | WO | 1999/036810 | A1 | |
| | | | | EP | 1051649 | A1 | |
| | | | | CN | 1288521 | A | |
| JP | 2020-170159 | A | 15 October 2020 | (Family: none) | | | |
| WO | 2005/040868 | A1 | 06 May 2005 | US | 2007/0273964 | A1 | |
| | | | | EP | 1686400 | A1 | |
| | | | | KR | 10-2006-0096064 | A | |
| | | | | CN | 1871532 | A | |
| | | | | TW | 200528270 | A | |
| WO | 2022/195372 | A1 | 22 September 2022 | US | 2024/0184030 | A1 | |
| | | | | EP | 4308984 | A1 | |
| | | | | CN | 116981971 | A | |
| | | | | TW | 202300962 | A | |
| WO | 2019/198635 | A1 | 17 October 2019 | US | 2021/0138772 | A1 | |
| | | | | EP | 3778223 | A1 | |
| | | | | CN | 111954598 | A | |
| | | | | KR | 10-2020-0143402 | A | |
| | | | | TW | 201943552 | A | |
| JP | 2023-133241 | A | 22 September 2023 | (Family: none) | | | |

Form PCT/ISA/210 (patent family annex) (July 2022)

**REFERENCES CITED IN THE DESCRIPTION**

**Patent documents cited in the description**

- JP 2010017854 A
- JP 2001310407 A
- WO 2005040868 A
- WO 2018181687 A
- WO 2005017600 A
- WO 2019198635 A